(19) 

Europäisches
Patentamt

European
Patent Office

Office européen
des brevets

(11) **EP 4 757 298 A1**

(12) **EUROPEAN PATENT APPLICATION**
published in accordance with Art. 153(4) EPC

(43) Date of publication:
**10.06.2026 Bulletin 2026/24**

(21) Application number: **25821009.5**

(22) Date of filing: **14.05.2025**

(51) International Patent Classification (IPC):
**H04M 1/02** (2006.01)

(52) Cooperative Patent Classification (CPC):
**H04M 1/02**

(86) International application number:
**PCT/CN2025/094803**

(87) International publication number:
**WO 2025/256330 (18.12.2025 Gazette 2025/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.06.2024 CN 202410768142
28.06.2024 CN 202410869806**

(71) Applicant: **Honor Device Co., Ltd.
Shenzhen, Guangdong 518040 (CN)**

(72) Inventor: **LU, Xingan
Shenzhen, Guangdong 518040 (CN)**

(74) Representative: **MERH-IP Matias Erny Reichl
Hoffmann
Patentanwälte PartG mbB
Paul-Heyse-Straße 29
80336 München (DE)**

(54) **DISPLAY METHOD, ELECTRONIC DEVICE, READABLE MEDIUM AND PROGRAM PRODUCT**

(57) This application provides a display method, an electronic device, a readable medium, and a program product. A display of the electronic device includes a first area and a second area that do not overlap. A hole area is provided in the second area, and a camera is mounted in the hole area. The first area is an image display area. When the electronic device displays a first interface, a user inputs an operation of rotating the device in a first rotation direction, and in response to the operation of the user, the electronic device may first obtain and display a snapshot of the first interface, so that when the electronic device rotates, the display can first maintain display of interface content of the first interface. When transparency of the snapshot of the first interface is less than a second value, the image display area first displays a second image in a third direction, and then displays an animation of transition from the second image to a third image. The second image is displayed in a direction of a first image.

FIG. 2

## Description

This application claims priorities to Chinese Patent Application No. 202410869806.8, filed with the China National Intellectual Property Administration on June 28, 2024 and entitled "DISPLAY METHOD, ELECTRONIC DEVICE, READABLE MEDIUM, AND PROGRAM PRODUCT", and to Chinese Patent Application No. 202410768142.6, filed with the China National Intellectual Property Administration on June 13, 2024 and entitled "DISPLAY METHOD, ELECTRONIC DEVICE, READABLE MEDIUM, AND PROGRAM PRODUCT", which are incorporated herein by reference in their entireties.

## TECHNICAL FIELD

This application relates to the field of display technologies, and in particular, to a display method, an electronic device, a computer program product, and a computer-readable storage medium.

## BACKGROUND

A special-shaped screen means that a part of a non-special-shaped screen is cut off, and a cut-off area is used to place components such as a camera and an earpiece. The special-shaped screen may be used on an electronic device such as a mobile phone. The electronic device usually displays an image by using a partial area of the special-shaped screen, and the area usually needs to avoid an installation area of a component such as a camera or an earpiece.

In a process of displaying content on the special-shaped screen, to follow a user to adjust a holding manner of the electronic device, for example, adjust from portrait holding to landscape holding, the special-shaped screen of the electronic device may display a window switching animation. However, a function of displaying the window switching animation on the special-shaped screen by the electronic device needs to be further improved.

## SUMMARY

This application provides a display method, an electronic device, a computer program product, and a computer-readable storage medium, so that an electronic device can perform window rotation in response to an operation of a user, and a rotation animation is displayed on a special-shaped screen in a window rotation process.

To achieve the foregoing objective, this application provides the following technical solutions:

According to a first aspect, this application provides a display method applied to an electronic device. A display of the electronic device includes a first area and a second area, the first area and the second area do not overlap, a hole area is provided in the second area, and a camera is mounted in the hole area. The display method includes: The display of the electronic device displays a first interface, where a first image is displayed in an area that is in the first interface and that corresponds to the first area, the first image is displayed in a first direction, a menu control is displayed in the second area, and the menu control is used to process the first image, for example, used to delete the first image, add the first image to favorites, or return to a previous interface of the first interface. A user inputs an operation of rotating the device in a first rotation direction, and the electronic device may obtain a snapshot of the first interface in response to the operation of rotating in the first rotation direction. The electronic device displays the snapshot, where the first image is displayed in a second direction in the displayed snapshot, the second direction and the first direction have a first included angle, the first included angle is, for example, 90°, and transparency of the snapshot is a first value (for example, 1). The electronic device displays a second interface when a transparency value of the snapshot is less than a second value, where a second image is displayed in an area that is in the second interface and that corresponds to the first area, the second image is displayed in a third direction, the third direction is a direction in a process in which the second direction transitions to the first direction, and the second value is less than the first value. If the transparency of the snapshot is the second value, it may indicate that the snapshot is relatively transparent, and a lower-layer interface of the snapshot displayed by the electronic device can be seen by the user. The electronic device displays an animation of transition from the second image to a third image in the second interface, where the third image is displayed in the first area in the first direction when the electronic device displays the third image. The menu control is continuously displayed in the second area in a process of displaying the second image and the animation of transition from the second image to the third image in the first area of the display of the electronic device.

It may be understood that, in the foregoing technical solution, the first image, the second image, and the third image are different images drawn by the electronic device.

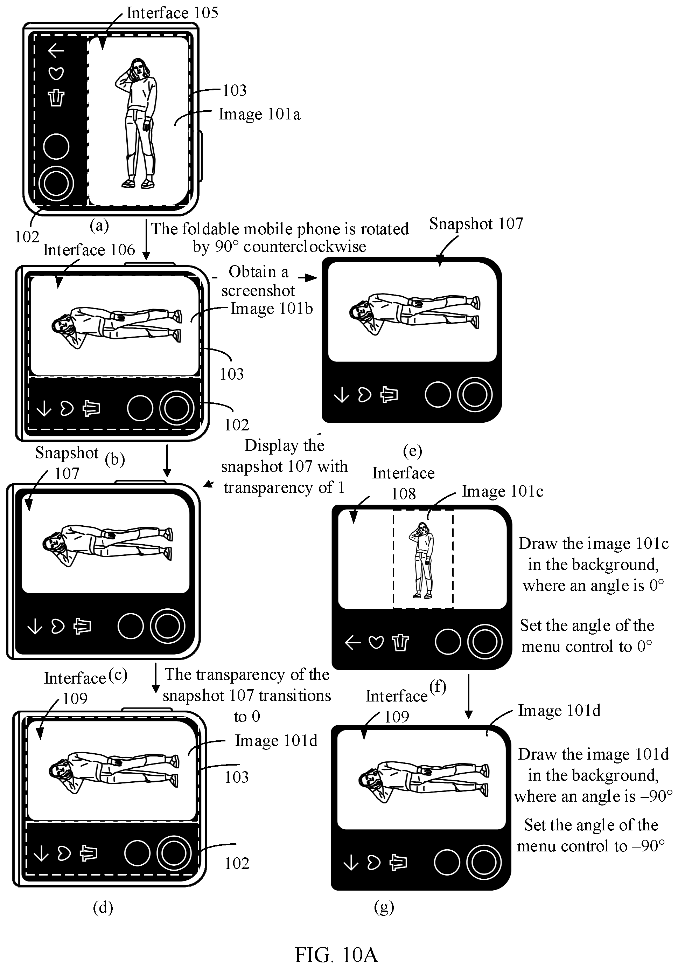

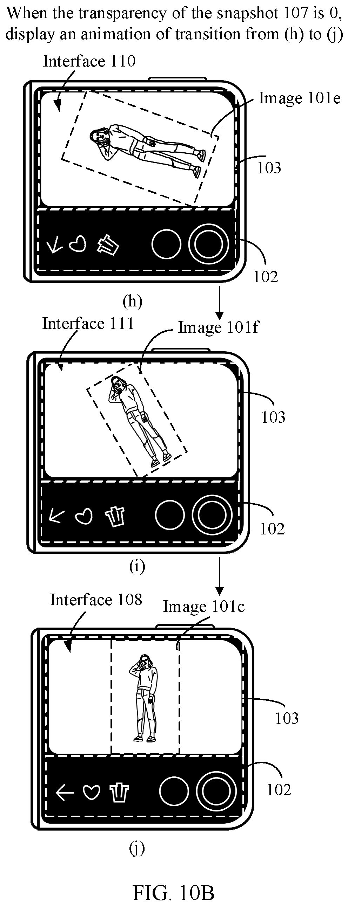

In the foregoing technical solution, the first area of the display may be understood as an image display area. When the electronic device displays a first interface 105 shown in (a) in FIG. 10A, an image in the first interface 105 is displayed in the first direction. The user inputs an operation of rotating the device in the first rotation direction (for example, rotating by 90° counterclockwise), and in response to the operation of the user, the electronic device may first obtain a snapshot of the first interface and display the snapshot, as shown in (c) in FIG. 10A. In this way, when the electronic device rotates, the display can first maintain display of interface content of the first interface. The transparency of the snapshot of the first interface is changeable, and can change from non-transparent to transparent. Therefore, when the transparency of the snapshot of the first interface is less than the second value (the second value is a value approaching 0, for example, 0.1), the image display area of the display first displays the second image in the third direction (as shown in (d) in FIG. 10A), and then displays the animation of transition from the second image to the third image. The third image is displayed in a direction of the first image (as shown in (d) in FIG. 10A to (j) in FIG. 10B). In this way, when the user adjusts a holding manner of the electronic device, and therefore a screen rotates, the image display area of the display can display an image rotation animation.

Based on the first aspect, in a possible implementation, after the electronic device displays the snapshot, and before the second interface is displayed, the display method further includes: The electronic device determines a display position of the second image; and the electronic device draws the second image in a first view corresponding to the first area based on the display position of the second image.

In this implementation, the electronic device draws the second image in the second interface in a manner of drawing the second image on a view in the image display area based on the display position of the second image, so that a size or an angle of the view in the image display area does not need to change. This can avoid a problem that due to a size mismatch between the view and the image display area caused by a change of the size of the view, the electronic device cannot respond to an operation that is input by the user in the image display area, and can further avoid a problem that the angle of the view changes, but an angle of an image displayed in the view does not change with the view, and consequently, a rotation animation cannot be displayed.

Based on the first aspect, in a possible implementation, after the electronic device displays the snapshot, the display method further includes: The electronic device creates the first view, where a size of the first view is a first size; the electronic device determines a display position of a fourth image; and the electronic device draws the fourth image in the first view based on the display position of the fourth image, where a direction of the fourth image is the first direction. It may be understood that, after the user rotates the electronic device in the first rotation direction, the electronic device may display a rotation animation in response to the operation. In addition, in a process in which the electronic device displays the rotation animation, the first view corresponding to the first area is usually created only once. In some cases, the electronic device may alternatively draw the first view corresponding to the first area for a plurality of times, provided that it can be ensured that the drawn first view has a same size as the first area, and an angle does not change.

It may be understood that the first image, the second image, the third image, and the fourth image are also different images drawn by the electronic device.

Based on the first aspect, in a possible implementation, in a process of drawing the fourth image in the first view, the transparency of the snapshot transitions from a third value to a fourth value, the third value is less than the first value and greater than the second value, and the fourth value is less than the third value and greater than the second value; and in a process in which the transparency of the snapshot transitions from the third value to the fourth value, the fourth image is invisible to the user. For example, both the third value and the fourth value are values between 0.1 and 1.

In this implementation, when the electronic device displays the snapshot, the electronic device creates the first view of the first area, and draws the fourth image in the first video based on the display position of the fourth image. This may be understood as that the electronic device draws the fourth image in the background, and the fourth image is invisible to the user, so that a problem of screen flickering of the electronic device can be avoided.

In some embodiments, in a process in which the transparency of the snapshot transitions from the third value to the fourth value, the electronic device may further draw a plurality of frames of images in the first view, but all the drawn images are invisible to the user.

Based on the first aspect, in a possible implementation, in a process in which the transparency of the snapshot transitions from the first value to the second value, an image drawn by the electronic device in the first view is invisible to the user. The second value is a value that approaches 0, and is used to indicate that the snapshot is relatively transparent, and the user can see a next-layer interface shielded by the snapshot. Therefore, in a process in which the transparency of the snapshot changes from the first value to the second value, all images drawn by the electronic device in the first view are shielded by the snapshot, and cannot be seen by the user.

Based on the first aspect, in a possible implementation, the display method further includes: Before determining the display position of the fourth image, the electronic device determines whether there is an animation; and when determining that there is no animation, determines the display position of the fourth image, and sets a start animation after a delay of first duration.

Based on the first aspect, in a possible implementation, the display method further includes: Before determining the display position of the second image, the electronic device determines whether there is an animation; and determines the display position of the second image when the electronic device determines that there is an animation.

Based on the first aspect, in a possible implementation, that the electronic device creates the first view includes: setting an angle of the display to a first angle; and creating the first view based on the first angle.

Based on the first aspect, in a possible implementation, after the snapshot of the first interface is obtained, the method further includes: The electronic device starts a window animation, where the window animation is used to control the transparency of the snapshot to transition from the first value to a fifth value when the electronic device displays the snapshot, the fifth value indicates that the snapshot is completely transparent, the fifth value is less than or equal to the second value, and duration of transition from the first value to the fifth value is second duration. For example, the fifth value is 0.

In this implementation, when the electronic device starts the window animation, to control the snapshot to change from non-transparent to completely transparent, it can be ensured that when the snapshot changes to semi-transparent, the electronic device can display the second interface.

In some scenarios, the transparency of the snapshot transitions to 0, and the electronic device completely draws the second image in the second interface and displays the second image by using the display. In these scenarios, the second value and the fifth value are a same value. In some scenarios, when the transparency of the snapshot transitions to a value approaching 0, for example, 0.1, the electronic device completely draws the second image in the second interface and displays the second image by using the display, and the fifth value is less than the second value.

Based on the first aspect, in a possible implementation, before the display of the electronic device displays the first interface, the method further includes: The electronic device sets the angle of the display to a second angle; the electronic device creates a second view of the first area based on the second angle, where a size of the second view is a second size; the electronic device determines a display position of the first image; and the electronic device draws the first interface in the second view based on the display position of the first image.

Based on the first aspect, in a possible implementation, determining the display position of the second image includes: obtaining a scaling ratio, an offset, and a display angle of the second image through calculation, where the display angle of the second image is used to indicate the third direction, the scaling ratio of the second image is used to indicate a proportional relationship between the second image and the first area, and the offset of the second image is used to indicate a display area of the second image in the first area; and determining the display position of the second image based on the scaling ratio, the offset, and the display angle of the second image.

Based on the first aspect, in a possible implementation, the obtaining a scaling ratio, an offset, and a display angle of the second image through calculation includes: obtaining a change rate of a scaling ratio of an image, a change rate of an offset, and a change rate of a display angle through calculation, obtaining, through calculation based on a total change amount of the scaling ratio of the image and the change rate of the scaling ratio of the image, a change value of the scaling ratio of the image corresponding to one image drawing operation, and using a sum of a scaling ratio of a fifth image and a change amount of the scaling ratio of the image as the scaling ratio of the second image; obtaining, through calculation based on a total change amount of an offset of the image and a change rate of the offset of the image, a change value of the offset of the image corresponding to one image drawing operation, and using a sum of an offset of the fifth image and a change amount of the offset of the image as the offset of the second image; and obtaining, through calculation based on a total change amount of a display angle of the image and a change rate of the display angle of the image, a change value of the display angle of the image corresponding to one image drawing operation, and using a sum of a display angle of the fifth image and a change amount of the display angle of the image as the display angle of the second image.

The fifth image is drawn by the electronic device based on a previous drawing operation of a drawing operation for the second image; and the total change amount of the scaling ratio of the image refers to a difference between a scaling ratio of the first image and a scaling ratio of the third image, the total change amount of the offset of the image refers to a difference between an offset of the first image and the scaling ratio of the third image, and the total change amount of the display angle of the image refers to an angle by which the electronic device rotates in the first rotation direction.

Based on the first aspect, in a possible implementation, an implementation in which the electronic device displays the animation of transition from the second image to the third image in the second interface includes: The electronic device draws and displays an image in the first view based on display positions of images corresponding to a plurality of drawing operations, where the display positions of the images corresponding to the plurality of drawing operations are used to indicate that the image transitions from the second image to the third image. In some embodiments, a display position of an image obtained through each drawing operation of the electronic device is indicated by a scaling ratio, an offset, and a display angle of the image.

Based on the first aspect, in a possible implementation, the first image, the second image, and the third image correspond to a same image in a gallery. In an application scenario, the electronic device starts a camera application to run to shoot an image, and stores the image in the gallery. The user inputs an image browsing operation by operating a component linked to the gallery application on a camera browsing interface, and the electronic device displays the first interface in response to the operation. The first image, the second image, and the third image each may be understood as the image that is shot and stored in the gallery by the electronic device.

Based on the first aspect, in a possible implementation, the first image, the second image, and the third image correspond to different frames of images in a same video. In an application scenario, the electronic device starts a camera application to run to shoot a video, and stores the video in the gallery. The user inputs a video browsing operation by operating a component linked to the gallery application on a camera browsing interface, and the electronic device displays the first interface in response to the operation. The first image, the second image, and the third image may be understood as different frames of images in the video that is shot and stored in the gallery by the electronic device.

Based on the first aspect, in a possible implementation, determining the display position of the second image includes: calculating a width and a height for displaying the second image, and setting a display angle and an offset of the second image by using a matrix object, where the display angle of the second image is used to indicate the third direction, and the offset is used to indicate a display area of the second image in the first area; and determining the display position of the second image based on the width and the height for displaying the second image, the offset, and the display angle.

Based on the first aspect, in a possible implementation, a manner of setting the display angle and the offset of the second image by using the matrix object includes: constructing a first matrix object, where the offset and the display angle of the second image are stored in the first matrix object; and writing, through an interface between a transaction Transaction component and an application layer of the electronic device, the offset and the display angle of the second image into a second matrix object of the Transaction component.

In this implementation, the Transaction component is a component that is at a framework layer and that is not open to the application layer. An application at the application layer cannot modify a matrix object in the Transaction component, and consequently, an angle cannot be written into the matrix object. Based on this, the interface is set between the Transaction component and the application layer, so that the application at the application layer can modify the matrix object in the Transaction component. The electronic device sets, through the interface that is set between the Transaction component and the application layer, data of the matrix object including an angle and an offset to the matrix object in the Transaction component. In this way, the electronic device draws a picture of a video based on the matrix object, and video content can be rotated based on the angle.

Based on the first aspect, in a possible implementation, the first image is displayed at a center position in the area that is in the first interface and that corresponds to the first area; the second image is displayed at a center position in the area that is in the second interface and that corresponds to the first area; and the third image is displayed at the center position in the area that is in the second interface and that corresponds to the first area.

Based on the first aspect, in a possible implementation, in a process in which the electronic device displays the animation of transition from the second image to the third image in the second interface, the electronic device further displays, in the second area, an animation of transition of the menu control from the third direction to the first direction.

Based on the first aspect, in a possible implementation, the menu control includes one or more of an add to favorites control, a return control, and a delete control, and that the menu control is used to process the first image includes: when the menu control includes the add to favorites control, receiving an operation performed on the add to favorites control, and adding the first image to a favorites album of the gallery; when the menu control includes the return control, receiving an operation performed on the return control, and displaying a third interface, where the third interface is a previous-level interface of the first interface; or when the menu control includes the delete control, receiving an operation performed on the delete control, and deleting the first image.

According to a second aspect, this application provides an electronic device, including: one or more processors, a memory, and a display. The memory and the display are coupled to the one or more processors, the memory is configured to store computer program code, the computer program code includes computer instructions, and when the one or more processors execute the computer instructions, the electronic device performs the display method according to any one of the first aspect and the possible implementations of the first aspect.

According to a third aspect, this application provides a computer-readable storage medium, configured to store a computer program. When being executed, the computer program is specifically used to implement the display method according to any one of the first aspect and the possible implementations of the first aspect.

According to a fourth aspect, this application provides a computer program product. When the computer program product runs on a computer, the computer is enabled to perform the display method according to any one of the first aspect and the possible implementations of the first aspect.

**BRIEF DESCRIPTION OF DRAWINGS**

FIG. 1 is a schematic diagram of a foldable mobile phone whose display is folded in a horizontal direction according to an embodiment of this application;
FIG. 2 is a schematic diagram of four display postures of a foldable mobile phone according to an embodiment of this application;
FIG. 3 and FIG. 4 are schematic diagrams of displaying images with other aspect ratios by a foldable mobile phone at portrait 0° and landscape 90° according to an embodiment of this application;
FIG. 5 to FIG. 7 are schematic diagrams of a principle of abnormally displaying an image by a special-shaped screen when a foldable mobile phone switches between landscape mode and portrait mode;

FIG. 8 is a diagram of a hardware structure of an electronic device according to an embodiment of this application;

FIG. 9 is a diagram of a software framework of an electronic device according to an embodiment of this application;

FIG. 10A, FIG. 10B, and FIG. 11 are schematic diagrams of a principle of displaying, by a foldable mobile phone, an animation of switching between landscape mode and portrait mode in an image display scenario of the foldable mobile phone according to an embodiment of this application;

FIG. 12A and FIG. 12B are an interaction diagram of a display method in an image display scenario of a foldable mobile phone according to an embodiment of this application;

FIG. 13 is a flowchart of obtaining, through calculation, a scaling ratio, an offset, and a display angle of an image corresponding to one time of drawing in an animation process according to an embodiment of this application;

FIG. 14 and FIG. 15 are schematic diagrams of a principle of abnormally displaying a video by a special-shaped screen when a foldable mobile phone switches between landscape mode and portrait mode;

FIG. 16A and FIG. 16B are schematic diagrams of a principle of displaying, by a foldable mobile phone, an animation of switching between landscape mode and portrait mode in a video play scenario of the foldable mobile phone according to an embodiment of this application;

FIG. 17A and FIG. 17B are an interaction diagram of a display method in a video play scenario of a foldable mobile phone according to an embodiment of this application; and

FIG. 18 is a flowchart of setting video content and matrix data into Transaction according to an embodiment of this application.

## DESCRIPTION OF EMBODIMENTS

The following clearly and completely describes technical solutions in embodiments of this application with reference to the accompanying drawings in embodiments of this application. The terms used in the following embodiments are merely used for describing specific embodiments, and are not intended to limit this application. As used in the specification and the appended claims of this application, singular expressions "one", "a", "the", "the foregoing", and "this" are also intended to include an expression such as "one or more", unless contrary indication is clearly specified in the context. It should be further understood that in embodiments of this application, "one or more" means one, two, or more than two, and "and/or" describes an association relationship between associated objects and indicates that three relationships may exist. For example, A and/or B may indicate the following cases: Only A exists, both A and B exist, and only B exists, where A and B may be singular or plural. The character "/" usually indicates an "or" relationship between associated objects.

Reference to "an embodiment", "some embodiments", or the like described in this specification means that specific features, structures, or characteristics described with reference to the embodiment are included in one or more embodiments of this application. Therefore, statements such as "in one embodiment", "in some embodiments", or "in some other embodiments" that appear in different parts of this specification do not necessarily refer to same embodiments, but mean "one or more but not all embodiments", unless otherwise specifically emphasized in other manners. The terms "include", "contain", "have" and their variations mean "including but not limited to", unless otherwise specially emphasized in other manners.

"A plurality of" in the embodiments of this application means "greater than or equal to two". It should be noted that in the description of the embodiments of this application, words such as "first" and "second" are merely used for distinguishing, and cannot be understood as an indication or implication of relative importance or an indication or implication of a sequence.

With development of screen technologies, to pursue a higher screen-to-body ratio of a device, a special-shaped screen emerges. The special-shaped screen means that a part of a non-special-shaped screen is cut off, and a cut-off area is used to place components such as a camera and an earpiece. In some application scenarios, a foldable electronic device folded inward includes a foldable first screen and a second screen that is visible to a user when the first screen is in a folded state. The second screen may be a special-shaped screen, and the first screen may also be a special-shaped screen. During use, when a holding manner of the user does not change, a display of the foldable electronic device may be folded in a horizontal direction (similar to a conventional flip phone), or may be folded in a gravity direction, and the horizontal direction is perpendicular to the gravity direction.

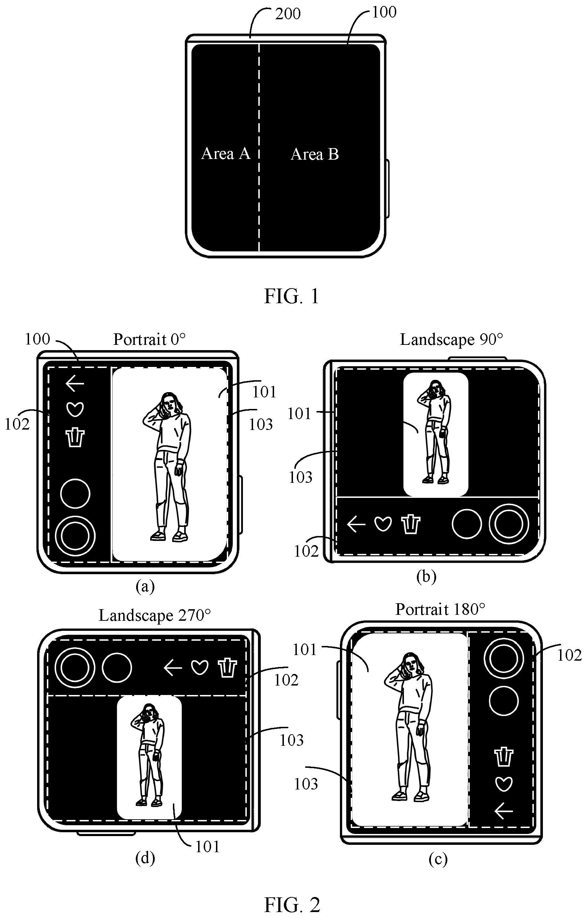

For example, FIG. 1 shows a foldable mobile phone whose display is folded in a horizontal direction. It may be understood that the foldable mobile phone shown in FIG. 1 is in a folded state, and a rotating shaft 200 of the foldable mobile phone is located on a top edge of the foldable mobile phone.

The foldable mobile phone includes a foldable first screen and a second screen 100. As shown in FIG. 1, the foldable mobile phone is in a folded state, and a user can see the second screen 100. The second screen 100 includes an area A (which may be referred to as a second area) and an area B (which may be referred to as a first area). The area A and the area B may be understood as two areas of the second screen 100, instead of referring to two separate screens, and the area A and the area B do not overlap. The area A can be used to dig a hole to mount a camera. The area B can be used as a display area of an image and an interface. An example in which the second screen 100 displays an image is used. The area A is used to display an operation menu of the image, for example, controls such as an add to favorites control, a return control, and a delete control. The area B is used to display image content. In the following content, the area A may be referred to as a menu display area, and the area B may be referred to as an image display area.

In some embodiments, the foldable mobile phone receives an operation performed on the add to favorites control, and may add a first image to a favorites album of a gallery. The foldable mobile phone receives an operation performed on the return control, and may display a previous-level interface of a first interface. The foldable mobile phone receives an operation performed on the delete control, and may delete the first image.

The user may hold the electronic device in two holding manners. The two holding manners are usually referred to as landscape holding and portrait holding. The foldable mobile phone shown in FIG. 1 is used as an example of the electronic device. The portrait holding may be understood as that when the user holds the foldable mobile phone, the rotating shaft 200 of the foldable mobile phone is perpendicular to a gravity direction. When the user holds the foldable mobile phone in portrait mode, the foldable mobile phone displays content in portrait mode. The landscape holding may be understood as that when the user holds the foldable mobile phone, the rotating shaft 200 of the foldable mobile phone is parallel to a gravity direction. When the user holds the foldable mobile phone in landscape mode, the foldable mobile phone displays content in landscape mode.

When the special-shaped screen displays an image or plays a video, if the user adjusts a holding manner, the electronic device can automatically rotate a window. For example, if the user adjusts from portrait holding to landscape holding, the electronic device automatically rotates the window, so that the window is switched from displaying a picture in portrait mode to displaying a picture in landscape mode. In addition, based on a limitation of a hole area of the special-shaped screen, when the electronic device rotates the window, the area A and the area B of the special-shaped screen separately display switching animations.

The following uses the foldable mobile phone shown in FIG. 1 as an example to describe a solution for switching between displaying an image in landscape mode and displaying an image in portrait mode by the special-shaped screen.

For example, FIG. 2 shows interfaces in which a special-shaped screen of a foldable mobile phone displays an image in landscape mode and displays an image in portrait mode. It should be noted that, for ease of viewing the image by a user, regardless of whether the special-shaped screen of the foldable mobile phone displays the image in landscape mode or displays the image in portrait mode, the foldable mobile phone maintains forward display of the image, and the image may be further located in a middle area of an image display area. Certainly, this does not constitute a limitation on a display direction and a display area of the image.

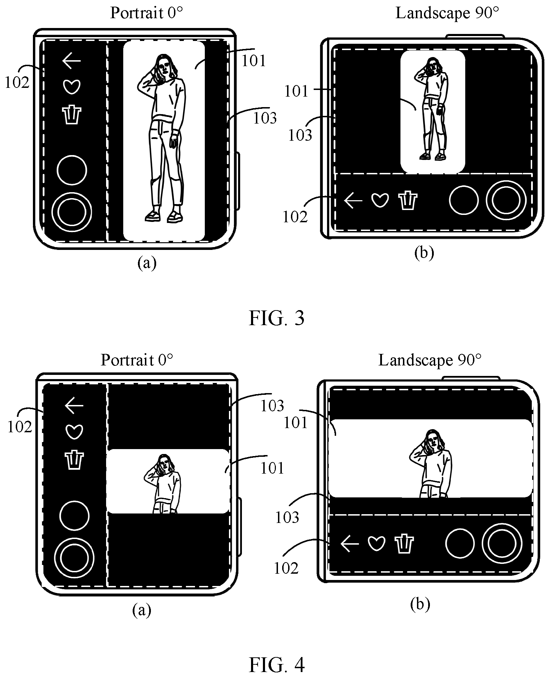

A size of the image may not fit that of the image display area. Therefore, before displaying the image in the image display area, the foldable mobile phone may first calculate a scaling ratio of the image, and scale the image based on the scaling ratio of the image. In addition, when an aspect ratio of the image is the same as or different from an aspect ratio of the image display area, a calculation rule for calculating the scaling ratio of the image by the foldable mobile phone varies. For details, refer to content in step S908 below. The following first describes, with reference to FIG. 2 and FIG. 3, interfaces in which images with three types of aspect ratios are displayed in the image display area.

In the example shown in FIG. 2, the aspect ratio of the image and the aspect ratio of the image display area are the same, for example, both are 16:9. In addition, FIG. 2 shows that the user rotates the screen counterclockwise to control the special-shaped screen of the foldable mobile phone to switch between displaying an image in portrait mode and displaying an image in landscape mode. However, this does not constitute a limitation on an application scenario of the solution in this application.

A posture of the foldable mobile phone shown in (a) in FIG. 2 may be defined as a posture at portrait 0°.

As shown in (a) in FIG. 2, the user holds the foldable mobile phone in portrait mode, the foldable mobile phone is in a folded state, and the special-shaped screen 100 is visible to the user. A menu display area 102 of the special-shaped screen 100 displays three controls: an add to favorites control, a return control, and a delete control, and further displays two hole areas (represented by circular holes in the figure), and an image display area 103 displays an image 101. The image 101 may be understood as an image stored in a gallery application.

Because an aspect ratio of the image 101 is the same as an aspect ratio of the image display area 103, a vertical direction shown in the figure is a height direction, a horizontal direction is a width direction, and a height displayed by the image 101 may be full of the image display area 103. A width displayed by the image 101 is also full of the image display area 103. Because the image can be scaled when being displayed, the height and the width displayed by the image 101 are not necessarily a height and a width of the image recorded in the gallery.

A posture of the foldable mobile phone shown in (b) in FIG. 2 may be defined as a posture at landscape 90°.

As shown in (b) in FIG. 2, the user controls the foldable mobile phone to rotate by 90° counterclockwise from portrait 0° shown in (a) in FIG. 2. Correspondingly, the image display area 103 is adjusted from portrait display to landscape display, and the menu display area 102 is also adjusted from portrait display to landscape display. In addition, the image 101 is only adjusted from portrait display to landscape display in the image display area 103, and may be further smoothly adjusted from portrait display to landscape display by using a switching animation. A control in the menu display area 102 is also adjusted from portrait display to landscape display in the menu display area 102, and similarly, may also be smoothly adjusted from portrait display to landscape display by using a switching animation.

In (b) in FIG. 2, a height displayed by the image 101 may be full of the image display area 103, but a width displayed by the image 101 is not full of the image display area 103, that is, a partial area in the image display area 103 in a horizontal direction does not display image content of the image 101.

A posture of the foldable mobile phone shown in (c) in FIG. 2 may be defined as a posture at portrait 180°.

As shown in (c) in FIG. 2, the user controls the foldable mobile phone to rotate by 90° counterclockwise from landscape 90° shown in (b) in FIG. 2. Correspondingly, the image display area 103 is adjusted from landscape display to portrait display, and the menu display area 102 is also adjusted from landscape display to portrait display. Similarly, in (c) in FIG. 2, the image 101 is only adjusted from landscape display to portrait display in the image display area, and a transition is completed by using a switching animation. A control in the menu display area 102 is also adjusted from landscape display to portrait display in the menu display area 102, and a transition is completed by using a switching animation.

In (c) in FIG. 2, a height displayed by the image 101 is full of the image display area 103, and a width displayed by the image 101 is also full of the image display area 103.

It should be noted that the user controls the foldable mobile phone to rotate by 180° counterclockwise from portrait 0°, and the special-shaped screen of the foldable mobile phone also needs to transition from an interface shown in (a) in FIG. 2 to an interface shown in (c) in FIG. 2. In addition, the image 101 also completes a transition in the image display area by using a switching animation.

A posture of the foldable mobile phone shown in (d) in FIG. 2 may be defined as a posture at landscape 270°.

As shown in (d) in FIG. 2, the user controls the foldable mobile phone to rotate by 90° counterclockwise from portrait 180° shown in (c) in FIG. 2. Correspondingly, the image display area 103 is adjusted from portrait display to landscape display, and the menu display area 102 is also adjusted from portrait display to landscape display. Similarly, in (d) in FIG. 2, the image 101 is only adjusted from portrait display to landscape display in the image display area, and a transition is completed by using a switching animation. A control in the menu display area 102 is also adjusted from portrait display to landscape display in the menu display area 102, and a transition is completed by using a switching animation.

In (d) in FIG. 2, a height displayed by the image 101 is full of the image display area 103, but a width displayed by the image 101 is not full of the image display area 103, that is, a partial area in the image display area 103 in a horizontal direction does not display image content of the image 101.

It should be noted that regardless of whether the user controls the foldable mobile phone to rotate by 90° clockwise from portrait 0°, or controls the foldable mobile phone to rotate by 270° counterclockwise from portrait 0°, or controls the foldable mobile phone to rotate by 180° counterclockwise from landscape 90°, the special-shaped screen of the foldable mobile phone is transitioned to an interface shown in (d) in FIG. 2, and the image 101 is also transitioned in the image display area by using a switching animation.

It can be learned from FIG. 2 that: when the aspect ratio of the image and the aspect ratio of the image display area on the special-shaped screen are the same, the special-shaped screen displays the image by using the four postures shown in FIG. 2. The height displayed by the image 101 may be full of the image display area 103, but a width displayed by the image 101 may not necessarily be full of the image display area 103.

In two intersecting edges of the image display area 103, an edge perpendicular to the rotating shaft is defined as a long edge of the image display area 103, an edge parallel to the rotating shaft is defined as a short edge of the image display area 103, and a length of the short edge is less than a length of the long edge. Certainly, in some embodiments, dimensions of the long edge and the short edge of the image display area may alternatively be the same, or the length of the short edge of the image display area may be greater than the length of the long edge. It may be understood that the height displayed by the image 101 is full of the image display area 103, but the width displayed by the image 101 is not necessarily full of the image display area 103. In essence, the image content of the image 101 may be full of the short edge of the image display area 103.

FIG. 3 and FIG. 4 are schematic diagrams of displaying images with other aspect ratios by a special-shaped screen at portrait 0° and landscape 90°.

In FIG. 3, the aspect ratio of the image 101 is greater than the aspect ratio of the image display area. As shown in (a) in FIG. 3, the menu display area 102 of the special-shaped screen displays three controls: an add to favorites control, a return control, and a delete control, and further displays two hole areas (represented by circular holes in the figure), and the image display area 103 displays the image 101. The special-shaped screen displays the image 101 at portrait 0°, the displayed height of the image 101 is full of the image display area 103, the displayed width of the image 101 is not full of the image display area 103, and both left and right sides of the image 101 are left with blank areas (the blank areas are presented in black in the figure). In (b) in FIG. 3, the display displays the image 101 at landscape 90°, the height displayed by the image 101 is full of the image display area 103, and the width displayed by the image 101 is not full of the image display area 103. Similarly, in a scenario in which the image 101 is displayed on the special-shaped screen at portrait 180° and landscape 270°, a height displayed by the image 101 is full of the image display area 103, and a width displayed by the image 101 is not full of the image display area 103.

Therefore, in a scenario in which the aspect ratio of the image 101 is greater than the aspect ratio of the image display area 103, when the image 101 is displayed on the special-shaped screen in four postures: portrait 0°, landscape 90°, portrait 180°, and landscape 270°, the height displayed by the image 101 is full of the image display area 103, but the width displayed by the image 101 is not full of the image display area 103.

In FIG. 4, the aspect ratio of the image 101 is less than the aspect ratio of the image display area 103. As shown in (a) in FIG. 4, the menu display area 102 of the special-shaped screen displays three controls: an add to favorites control, a return control, and a delete control, and further displays two hole areas (represented by circular holes in the figure), and the image display area 103 displays the image 101. The special-shaped screen displays the image 101 at portrait 0°, the displayed width of the image 101 is full of the image display area 103, the displayed height of the image 101 is not full of the image display area 103, and both upper and lower sides of the image 101 are left with blank areas (the blank areas are presented in black in the figure). In (b) in FIG. 4, the display displays the image 101 at landscape 90°, the width displayed by the image 101 is full of the image display area 103, the height displayed by the image is not full of the image display area 103, and both upper and lower sides of the image 101 are left with blank areas (the blank areas are presented in black in the figure). Similarly, in a scenario in which the image 101 is displayed on the special-shaped screen at portrait 180° and landscape 270°, a width displayed by the image 101 is full of the image display area 103, and a height displayed by the image 101 is not full of the image display area 103.

Therefore, in a scenario in which the aspect ratio of the image 101 is less than the aspect ratio of the image display area 103, when the image 101 is displayed on the special-shaped screen in four postures: portrait 0°, landscape 90°, portrait 180°, and landscape 270°, the width displayed by the image 101 is full of the image display area 103, but the height displayed by the image 101 is not full of the image display area 103.

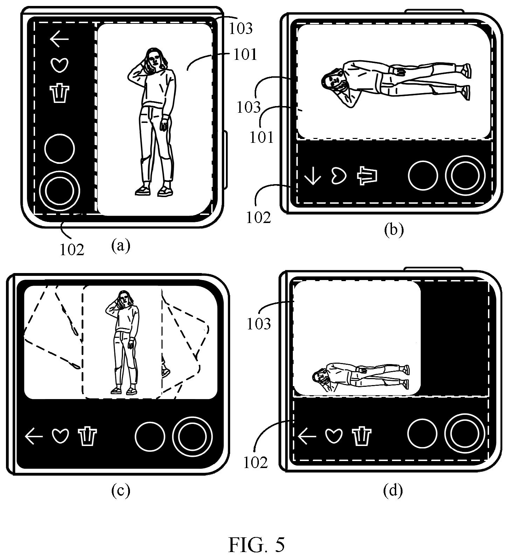

With reference to FIG. 5, the following describes an implementation solution in which the image display area 103 of the special-shaped screen 100 is switched from portrait display to landscape display by using an example in which the foldable mobile phone shown in FIG. 2 adjusts from displaying an image at portrait 0° to displaying an image at landscape 90°. However, this does not constitute a limitation on an application scenario in the solution.

As shown in (a) in FIG. 5, the special-shaped screen of the foldable mobile phone displays the image 101 in the image display area 103 in the posture of portrait 0°. Similarly, the menu display area 102 displays a menu control. In (a) in FIG. 5, a view (view) for displaying the image 101 has a same size as the image 101. In the following, the view for displaying the image 101 is referred to as a view of the image 101.

The user controls the foldable mobile phone to rotate by 90° counterclockwise. In response to the operation, the foldable mobile phone first controls the view of the image 101 to rotate by 90° counterclockwise following the foldable mobile phone, as shown in (b) in FIG. 5. In (b) in FIG. 5, the view of the image 101 also has a same size as the image 101.

Then, as shown in (c) in FIG. 5, the foldable mobile phone controls the view of the image circled by the dashed line box to rotate by 90° clockwise, and a size displayed in (b) in FIG. 5 is gradually reduced to the height of the image, which is the same as a short edge size of the image display area 103 (a white area in the figure). It may be understood that in (c) in FIG. 5, the dashed line box is used to indicate the view of the image, and the dashed line box is actually not displayed on the foldable mobile phone. In addition, for simple drawing, the operation menu of the menu display area does not show a rotation animation.

Then, the foldable mobile phone adjusts the width and the height of the view of the image 101, so that the view can have the same size as the image display area 103, to complete an operation of a landscape display layout. However, after the foldable mobile phone adjusts the width and the height of the view of the image 101, the special-shaped screen displays an interface shown in (d) in FIG. 5. In this interface, the image is not displayed in a forward direction or is not in a center position of the image display area 103, and the image is not displayed in the manner shown in (b) in FIG. 2.

A reason is as follows:

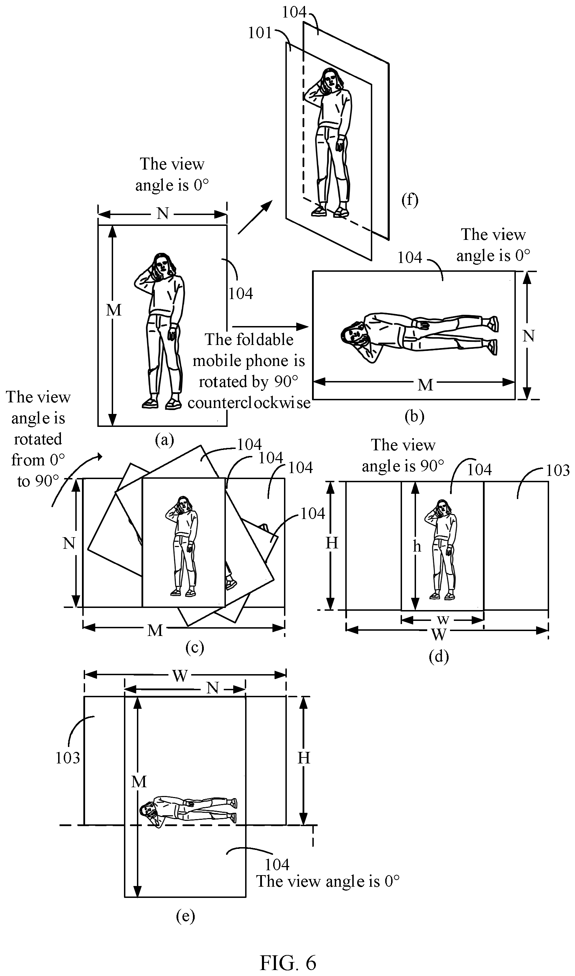

The foldable mobile phone performs an operation of adjusting the width and the height of the view of the image 101. Because the view of the image 101 is in a scaled state, the foldable mobile phone cannot adjust the width and the height of the view of the image 101. That is, the foldable mobile phone does not successfully complete the operation of adjusting the width and the height of the view of the image 101. Descriptions are provided in the following with reference to FIG. 6.

First, it should be noted that the view of the image is used to display the image. (f) in FIG. 6 shows an example that when the special-shaped screen of the foldable mobile phone displays the image 101 in a posture of portrait 0°, a size of the image 101 is the same as a size of a view 104 of the image 101. For the purpose of convenient drawing, in (a) to (e) in FIG. 6, the image 101 and the view 104 that have the same size are drawn into one layer to indicate the view 104 in which the image 101 is displayed (referred to as a view 104 below). However, this does not constitute a limitation on meanings of the image 101 and the view 104 of the image 101.

The special-shaped screen of the foldable mobile phone displays the image 101 in a posture of portrait 0°. The view 104 is as shown in (a) in FIG. 6, a height is M, a width is N, and an angle is 0°. The user controls the foldable mobile phone to rotate by 90° counterclockwise from portrait 0°. In response to the operation, the foldable mobile phone first controls the view 104 to rotate counterclockwise from portrait mode shown in (a) in FIG. 6 to landscape mode shown in (b) in FIG. 6. A width M of the view 104 shown in (b) in FIG. 6 is the same as a height M of the view 104 shown in (a) in FIG. 6. A height N of the view 104 shown in (b) in FIG. 6 is the same as a width N of the view 104 shown in (a) in FIG. 6. An angle of the view 104 is 0°. Then, as shown in (c) in FIG. 6, the foldable mobile phone controls the view 104 to gradually reduce a size while rotating by 90° clockwise, until as shown in (d) in FIG. 6. The view 104 is rotated by 90° clockwise, and the view 104 is reduced to a height h of an image displayed in the view, which is the same as a height H of the image display area 103. As described above, the image display area 103 may refer to the area B in FIG. 1.

It can be learned from (d) in FIG. 6 that, the height h of the image displayed in the view 104 is the same as the height H of the image display area 103. However, the width w of the image displayed in the view 104 is less than the width W of the image display area 103, and the view 104 has the same size as the image displayed in the view 104, that is, the width w of the view 104 is less than the width W of the image display area 103. In this case, the view 104 is not full of the image display area 103. Therefore, when the user performs a left-slide or right-slide operation on the image display area 103 to switch the image, the foldable mobile phone cannot respond to the operation, and switching display of the image cannot be implemented.

Therefore, the foldable mobile phone needs to adjust the width and the height of the view 104 displayed in (d) in FIG. 6, so that the width w of the view 104 is equal to the width W of the image display area 103, and the height h of the view 104 is equal to the height H of the image display area 103, to ensure that the view 104 is full of the image display area 103, thereby ensuring that the foldable mobile phone can respond to the left-slide or right-slide operation performed by the user on the image display area 103.

However, a rotation and reduction process of the view 104 shown in (c) in FIG. 6 is in essence a rotation and reduction process of a projected view 104 obtained through matrix calculation, and a size of the real view 104 is not adjusted. Therefore, the operation that the foldable mobile phone adjusts the width and the height of the view 104 shown in (d) in FIG. 6 becomes invalid, so that the view 104 is still as shown in (e) in FIG. 6, the angle is 0°, the height M is the same as the height M of the view 104 shown in (a) in FIG. 6, and the width N is the same as the width N of the view 104 shown in (a) in FIG. 6. In addition, the view 104 cannot be displayed in an area not located in the image display area 103, that is, an area below the dashed line box shown in (e) in FIG. 6 cannot be displayed. Finally, the special-shaped screen of the foldable mobile phone displays the interface shown in (d) in FIG. 5.

It should be noted that the view 104 may be smaller than or equal to the image display area 103, that is, the width M of the view 104 shown in (b) in FIG. 6 may be less than or equal to the width W of the image display area 103 shown in (d) in FIG. 6, and the height N of the view 104 shown in (b) in FIG. 6 may be less than or equal to the height H of the image display area 103 shown in (d) in FIG. 6.

Further:

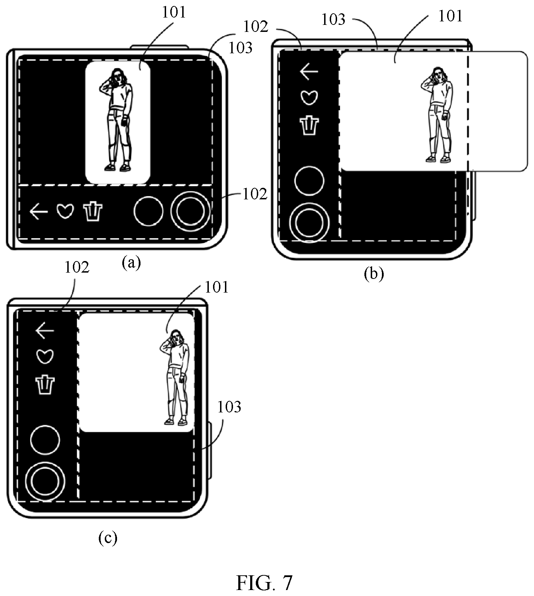

When the special-shaped screen of the foldable mobile phone switches from displaying an image in landscape mode to displaying an image in portrait mode, an interface displayed on the special-shaped screen also has a problem. For example, as shown in (a) in FIG. 7, the foldable mobile phone displays the image 101 in the image display area 103 at landscape 90°, and the menu display area 102 displays a menu control. The user adjusts the foldable mobile phone from landscape holding to portrait holding. In response to the operation of the user, the foldable mobile phone adjusts from displaying an image at landscape 90° to displaying an image at portrait 0°. The operation that the foldable mobile phone adjusts the width and the height of the view for displaying the image 101 cannot take effect. Consequently, the view for displaying the image 101 is as shown in (b) in FIG. 7, and is still displayed in landscape mode. Due to impact of the menu display area 102, the view for displaying the image 101 cannot be displayed in an area outside the image display area 103, that is, an area on the right side of the dashed line. Display of the foldable mobile phone is shown in (c) in FIG. 7, the view for displaying the image 101 is in a partial area of the image display area 103, and the image 101 is not displayed in the middle. It may be understood that (b) in FIG. 7 is not a diagram of an interface displayed by the special-shaped screen of the foldable mobile phone, and is merely used to describe a relationship between the view for displaying the image 101 and the image display area 103.

To resolve a problem that in a process in which a user adjusts a holding manner of an electronic device and a special-shaped screen automatically rotates a window, a view used by the electronic device to scale an image cannot respond to a slide operation of the user, and after the window is rotated, an image is not displayed in the middle and is not displayed in a forward direction on an interface displayed by the special-shaped screen, embodiments of this application provide a display solution.

The display solution provided in embodiments of this application is applicable to the foldable mobile phone shown in FIG. 1, and is also applicable to another type of electronic device, for example, a tablet computer with a special-shaped screen, a tablet computer, a personal digital assistant (personal digital assistant, PDA), a desktop computer, a laptop computer, a notebook computer, an ultra-mobile personal computer (ultra-mobile personal computer, UMPC), a handheld computer, a netbook, and a wearable device. A type of the electronic device is not specifically limited in this application. The electronic device is not limited to a device in a foldable form, but may be a straight panel device.

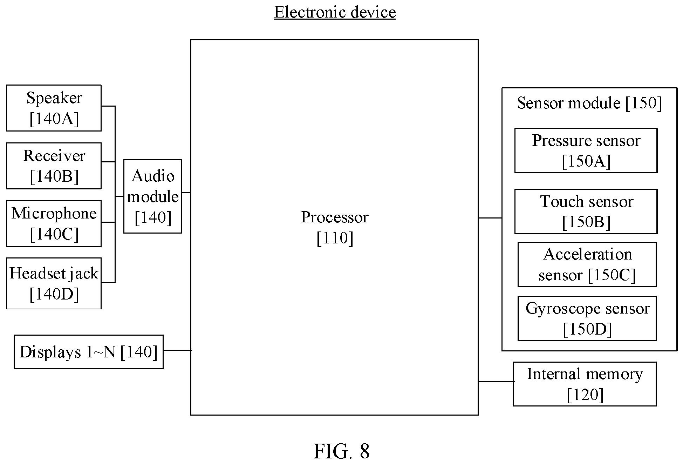

The mobile phone is used as an example. FIG. 8 shows an example of composition of an electronic device according to an embodiment of this application. As shown in FIG. 8, the electronic device may include a processor 110, an internal memory 120, a display 130, an audio module 140, a sensor module 150, and the like.

It may be understood that the structure shown in this embodiment does not specifically limit the electronic device. The electronic device may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a smart sensor hub (sensor hub), a neural-network processing unit (neural-network processing unit, NPU), and/or the like. A memory may be further disposed in the processor 110 to store instructions and data.

The internal memory 120 may be configured to store computer-executable program code, and the computer-executable program code includes instructions.

In some embodiments, the internal memory 120 stores instructions for the display solution. The processor 110 may execute the instructions stored in the internal memory 120, so that in a scenario in which an image is displayed on a special-shaped screen of the electronic device, the electronic device performs window rotation according to an operation of the user for adjusting a device holding manner, and in a window rotation process, the special-shaped screen displays a rotation animation, to ensure that after the animation ends, in an interface displayed by the special-shaped screen, an image is located at a center position and is displayed in a forward direction in an image display area.

The electronic device implements a display function by using the GPU, the display 130, the application processor, and the like. The GPU is a microprocessor for image processing, and is connected to the display 130 and the application processor. The GPU is configured to perform mathematical and geometric calculation for graphics rendering. The processor 110 may include one or more GPUs, which execute program instructions to generate or change display information.

The display 130 is configured to display an image, a video interface, and the like. In some embodiments, the electronic device may include one or N displays 130, where N is a positive integer greater than 1. In some embodiments, one display included in the electronic device is the special-shaped screen shown in FIG. 1.

The electronic device may implement an audio function such as music playing and recording by using the audio module 140, the speaker 140A, the receiver 140B, the microphone 140C, the headset jack 140D, the application processor, and the like.

In the sensor module 150, a pressure sensor 150A is configured to sense a pressure signal, and can convert the pressure signal into an electrical signal. The electronic device determines intensity of pressure based on a change of the capacitance. When a touch operation is performed on the display 130, the electronic device detects strength of the touch operation based on the pressure sensor 150A. The electronic device may alternatively calculate a touch position based on a detected signal of the pressure sensor 150A. The touch sensor 150B is also referred to as a "touch device". The touch sensor 150B may be disposed in the display 130. The touch sensor 150B and the display 130 constitute a touchscreen, which is also referred to as a "touch screen". The touch sensor 150B is configured to detect a touch operation performed on or near the touch sensor 150B.

The acceleration sensor 150C can detect magnitudes of acceleration of the electronic device in all directions (generally three axes). When the electronic device is still, the acceleration sensor may detect a magnitude and a direction of gravity, and may be further configured to identify a posture of the electronic device. The gyro sensor 150D may be configured to determine a movement posture of the electronic device.

The electronic device further runs an operating system above the hardware components shown in FIG. 8, for example, an iOS® operating system, an Android® operating system, or a Windows® operating system. An application such as Gallery may be installed and run on the operating system.

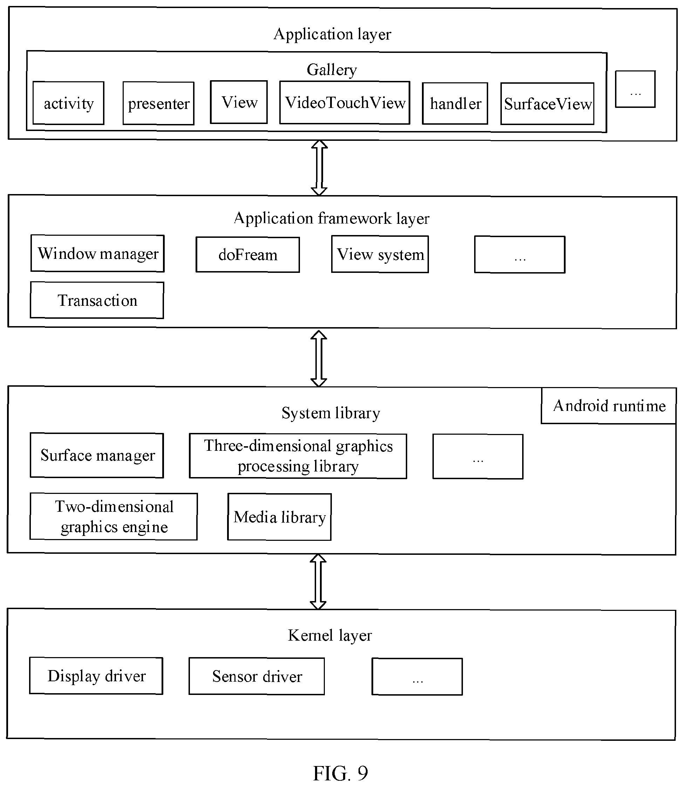

FIG. 9 is a schematic diagram of a software structure of an electronic device according to an embodiment of this application.

A layered architecture divides an operating system of the electronic device into several layers, and each layer has a clear role and task. Layers communicate with each other through a software interface. In some embodiments, the operating system of the electronic device is an Android system. The Android system may be divided into four layers from top to bottom: an application (application, APP) layer, an application framework layer (FWK for short), a system library, and a kernel layer.

The application layer may include a series of application packages. As shown in FIG. 9, the application packages may include applications such as Gallery.

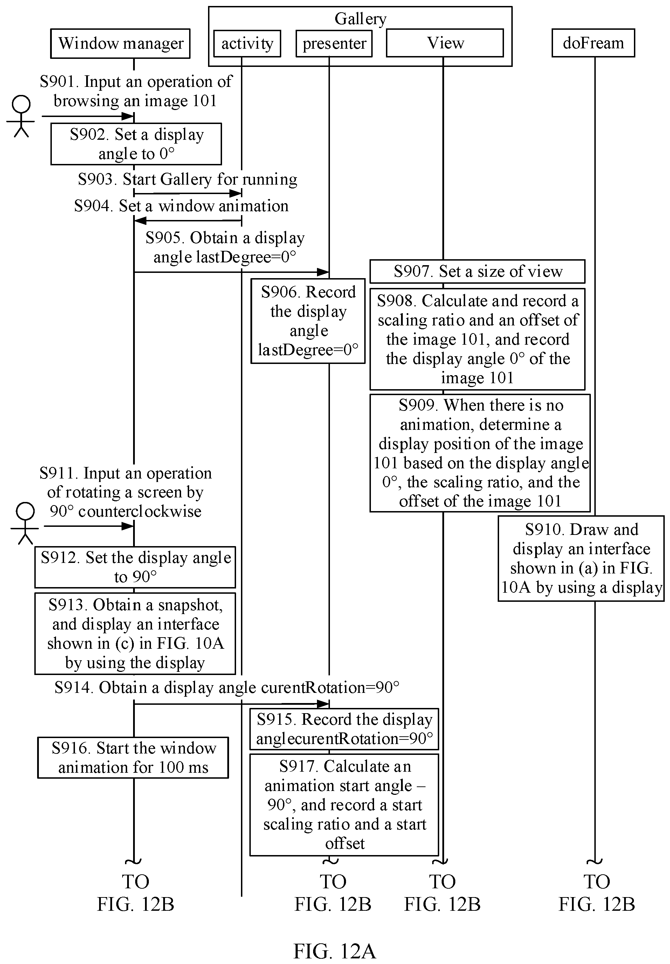

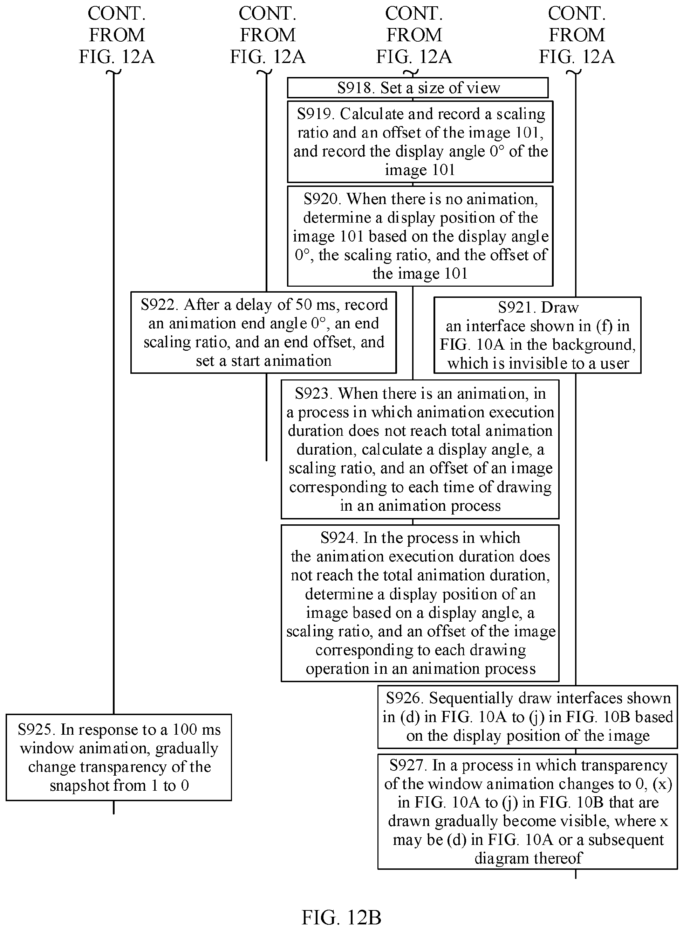

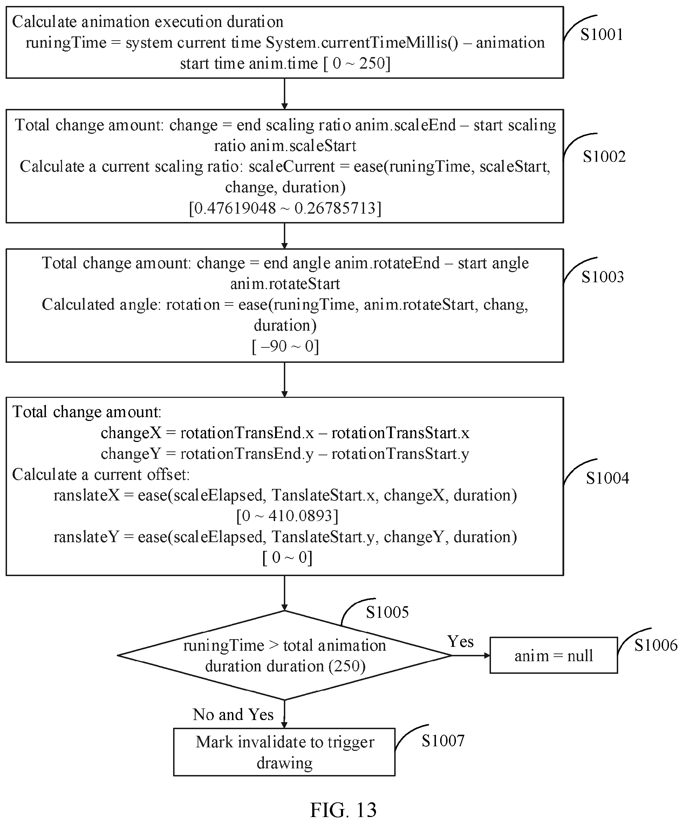

In some embodiments, the gallery application includes an activity component, a presenter component, a View component, and the like. Functions of the activity component, the presenter component, and the View component are described in content of the following embodiments corresponding to FIG. 12A and FIG. 12B and FIG. 13, and are not described herein.

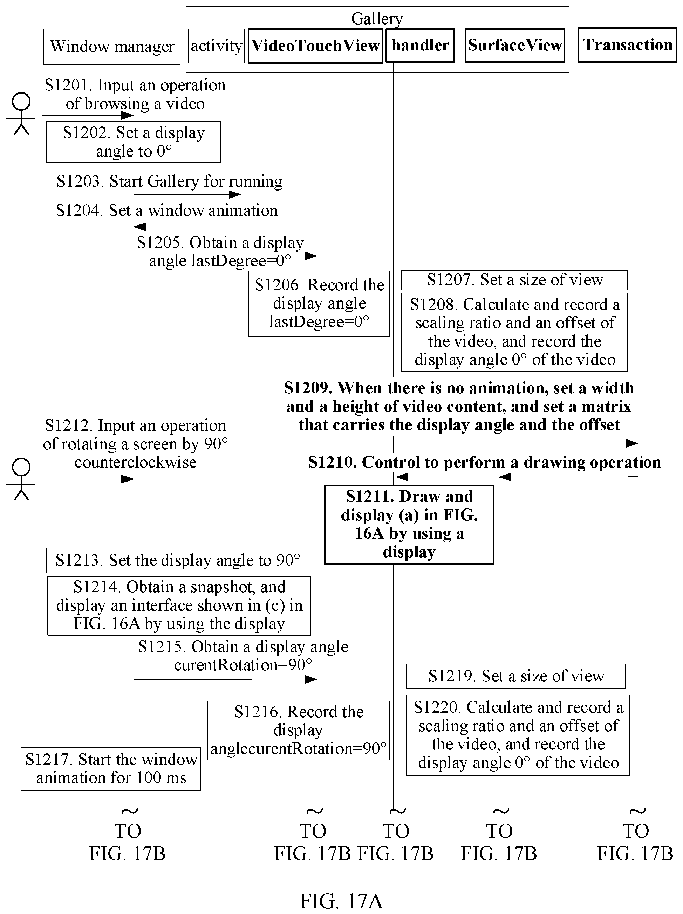

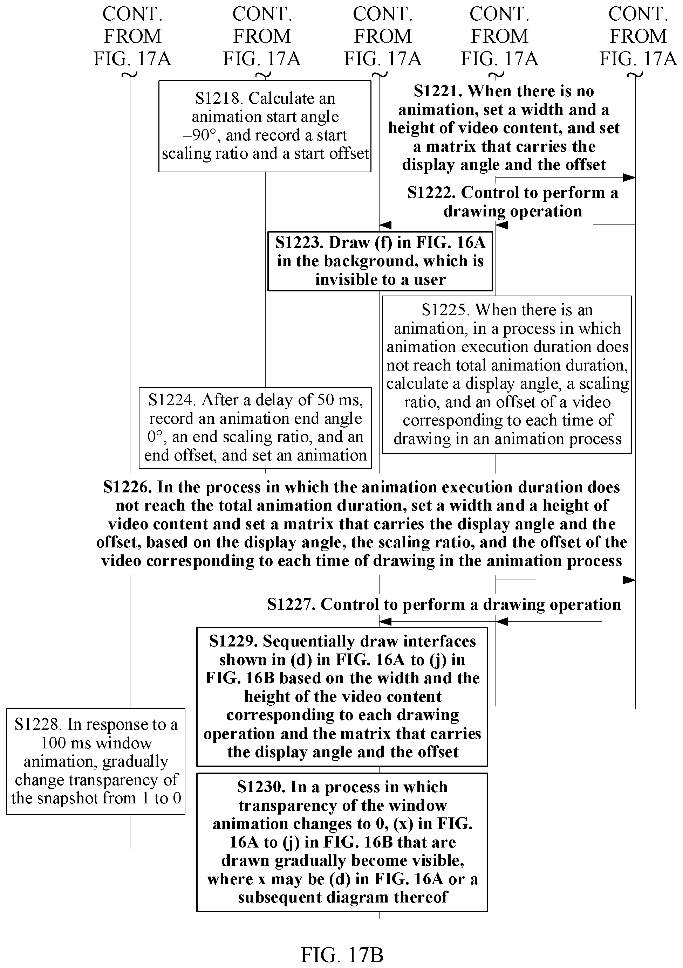

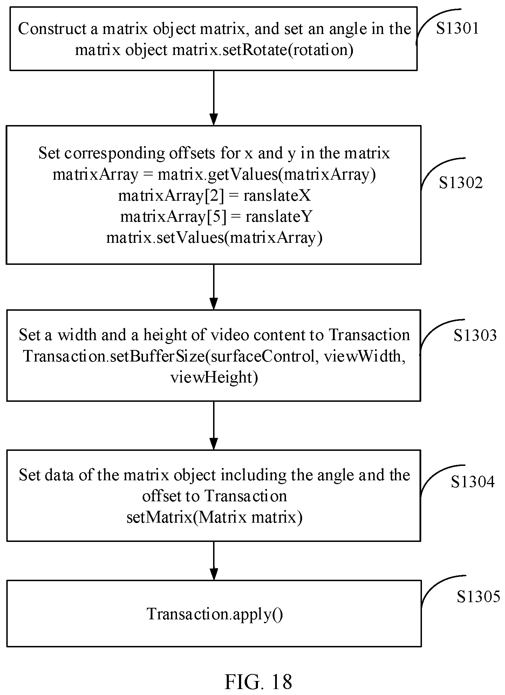

In some other embodiments, the gallery application further includes a VideoTouchView component, a handler component, and a SurfaceView component. Functions of the VideoTouchView component, the handler component, and the SurfaceView component are described in content of the following embodiments corresponding to FIG. 17A and FIG. 17B and FIG. 18, and are not described herein.

The application framework layer provides an application programming interface (application programming interface, API) and a programming framework for an application at the application layer. The application framework includes some predefined functions. As shown in FIG. 9, the application framework layer may include a window manager (WindowManager), a doFream component, a Transaction (transaction) component, a view system, and the like.

The window manager is configured to manage a window program. The window manager may control addition, deletion, display, and hiding of a window. The doFream component is configured to draw screen display content at a screen refresh moment. The Transaction component is configured to control the SurfaceView component to run to draw an image of a video. The view system includes visual components such as a text display component and a picture display component.

The Android Runtime includes a core library and a virtual machine. The Android runtime is responsible for scheduling and management of an Android system. The core library includes two parts: One part is a functional function that needs to be invoked in a java language, and the other part is a core library of Android. The application layer and the application framework layer run on the virtual machine.

The system library may include a plurality of functional modules, for example, a surface manager (surface manager), a media library (Media Libraries), a two-dimensional graphics engine, and a three-dimensional graphics processing library (for example, OpenGL ES). The surface manager is configured to manage a display subsystem, and provide 2D and 3D layer fusion for a plurality of applications. The media library supports playing and recording in a plurality of common audio and video formats, a still image file, and the like. The media library may support a plurality of audio and video coding formats, for example, MPEG4, H.264, MP3, AAC, AMR, JPG, and PNG. The three-dimensional graphics processing library is used to implement three-dimensional graphics drawing, image rendering and composition, layer processing, and the like. The two-dimensional graphics engine is a drawing engine for 2D drawing.

The kernel layer is a layer between hardware and software. The kernel layer includes at least a display driver, a sensor driver, and the like.

It should be further noted that, although the Android® system is used as an example for description in this embodiment of this application, a basic principle thereof is also applicable to an electronic device based on an operating system such as iOS® or Windows®.

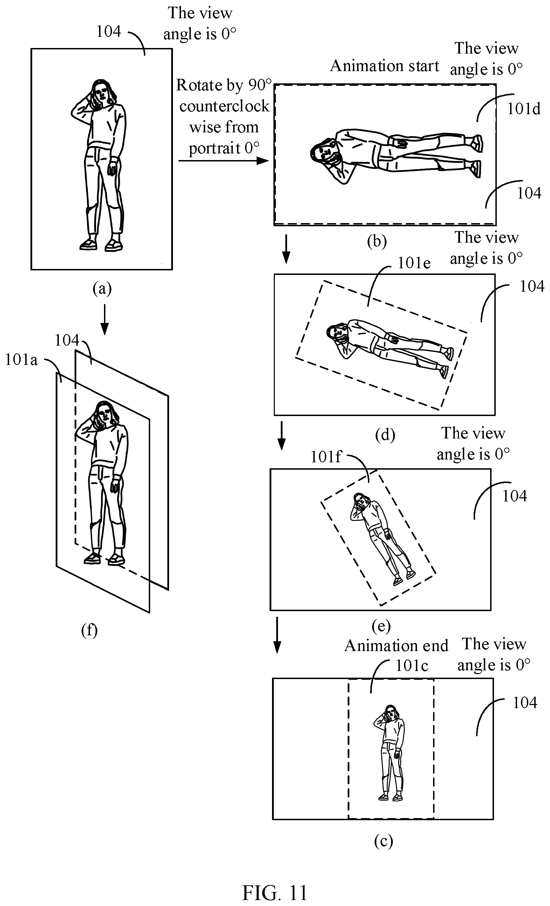

The following first describes an implementation principle of a display method provided in embodiments of this application with reference to FIG. 10A, FIG. 10B, and FIG. 11.

First, it should be noted that embodiments of this application are described by using an example in which a foldable mobile phone switches, by using a rotation animation based on an operation of a user for adjusting from portrait holding to landscape holding, from displaying an image in portrait mode to displaying an image in landscape mode, but this does not constitute a limitation on an application scenario of the display method.

As shown in (a) in FIG. 10A, an interface 105 (which may be referred to as a first interface) is displayed on a special-shaped screen of a foldable mobile phone in a posture of portrait 0°. The interface 105 includes an image 101a and three controls: an add to favorites control, a return control, and a delete control. The image 101a is located in an image display area 103 (which may be referred to as a first area), and the three controls: the add to favorites control, the return control, and the delete control, are located in a menu display area 102 (which may be referred to as a second area). A hole area is further provided in the menu display area 102, to mount a camera.

In (a) in FIG. 10A, relative to a same reference object such as a user, the image 101a is displayed in an upward direction (which may be referred to as a first direction), and is generally located in a middle position of the image display area 103. A size of a view of the image 101a is the same as a size of the image 101a. In the following, the user is used as a reference object to describe a display direction of an image.

The user controls the foldable mobile phone to rotate by 90° counterclockwise (which may be referred to as a first rotation direction). In response to the operation, the foldable mobile phone displays an interface 106 in a posture of landscape 90°. The interface 106 may be understood as an interface after the interface 105 displayed in (a) in FIG. 10A is rotated by 90° counterclockwise. The interface 106 includes an image 101b and three controls: an add to favorites control, a return control, and a delete control. The image 101b is located in the image display area 103, and the three controls: the add to favorites control, the return control, and the delete control, are located in the menu display area 102. In (b) in FIG. 10A, relative to the user, the image 101b is displayed in a leftward direction (which may be referred to as a second direction), and is generally located in a middle position of the image display area 103. A size of a view of the image 101b is also the same as a size of the image 101b. The interface 106 shown in (b) in FIG. 10A is configured to provide interface content of a start interface of a rotation animation.

Then, the foldable mobile phone obtains a snapshot of the interface 106 shown in (b) in FIG. 10A, to obtain an interface snapshot 107 shown in (e) in FIG. 10A. Interface content of the interface snapshot 107 is the same as that of the interface 106 shown in (b) in FIG. 10A, and is not described herein again.

Then, as shown in (c) in FIG. 10A, the foldable mobile phone may display the interface snapshot 107, and the foldable mobile phone further obtains a window animation based on the interface snapshot 107 shown in (e) in FIG. 10A. Based on the window animation, the foldable mobile phone displays the interface snapshot 107 gradually transitioning from transparency of 1 to 0. For example, transition duration may be 100 ms. Certainly, 1 and 0 are example values. If the transparency of the interface snapshot 107 is 1, it indicates that the interface snapshot 107 is completely non-transparent. If the transparency of the interface snapshot 107 is 0, it indicates that the interface snapshot 107 is completely transparent. In a process in which the foldable mobile phone displays the window animation obtained based on the interface snapshot 107, the foldable mobile phone draws an interface 108 shown in (f) in FIG. 10A in the background. The interface 108 includes an image 101c, and three controls: an add to favorites control, a return control, and a delete control. In (f) in FIG. 10A, the image 101c circled by a dashed line box is displayed in an upward direction (using the user as a reference object), and is generally located in a middle position of the image display area, and a display angle may be understood as 0°. The interface 108 shown in (f) in FIG. 10A serves as an end interface of the rotation animation.

In (f) in FIG. 10A, the dashed line box is used to indicate the image 101c, and the dashed line box is actually not drawn by the foldable mobile phone. In addition, that the foldable mobile phone draws the three controls: the add to favorites control, the return control, and the delete control, in the interface 108 is not a focus of description in this embodiment, and therefore is not described. It may be understood that an angle of the three menu controls displayed in the menu display area 102 may be set to 0° by the foldable mobile phone.

It should be noted that the interface 108 shown in (f) in FIG. 10A and the interface shown in (b) in FIG. 2 are a same interface. For the purpose of clearly showing the view of the image 101c in the interface 108, the interface 108 displays the view of the image 101c in white.

As described above, the interface 106 shown in (b) in FIG. 10A is used to provide interface content of a start interface of a rotation animation. Based on this, in a process in which the foldable mobile phone displays the window animation obtained based on the interface snapshot 107, the foldable mobile phone may draw, in the background based on the interface content of the interface 106 shown in (b) in FIG. 10A, an interface 109 shown in (g) in FIG. 10A, that is, the start interface of the rotation animation. The interface 109 includes an image 101d and three controls: an add to favorites control, a return control, and a delete control. In (g) in FIG. 10A, the user is used as a reference object, the image 101d is displayed in a leftward direction, and a display angle may be understood as -90°. An angle of the three menu controls displayed in the menu display area 102 may be further set to -90° by the foldable mobile phone. In addition, that the foldable mobile phone draws the three controls: the add to favorites control, the return control, and the delete control, in the interface 108 is not described.

It should be noted that, that the foldable mobile phone draws, in the background, the interface 109 shown in (g) in FIG. 10A includes: An image 101d displayed in the interface 109 shown in(g) in FIG. 10A is drawn in the background, and a menu control displayed in the interface 109 shown in(g) in FIG. 10A is drawn in the background. That the image 101d displayed in the interface 109 shown in(g) in FIG. 10A is drawn in the background may be understood as follows: Based on a display position of the image 101b in the interface 106 shown in (b) in FIG. 10A, the image 101d is drawn on a view, and the view does not change. It may be understood that background drawing is a drawing operation invisible to the user.

After the interface 109 shown in(g) in FIG. 10A is drawn in the background by the foldable mobile phone, the interface is displayed on the special-shaped screen. In addition, when the transparency of the snapshot 107 shown in (c) in FIG. 10A changes to 0, the special-shaped screen may display the interface 109. As shown in (d) in FIG. 10A, the foldable mobile phone displays the interface 109. The interface 109 includes an image 101d and three controls: an add to favorites control, a return control, and a delete control. The image 101d is located in the image display area 103, and the three controls: the add to favorites control, the return control, and the delete control, are located in the menu display area 102. Using the user as a reference object, the image 101d is displayed in a leftward direction, and is usually located in a middle position of the image display area 103. A size of the view of the image 101d is the same as a size of the image display area 103.

It should be noted that after the transparency of the snapshot 107 is 0, the foldable mobile phone may discard the snapshot 107.

It should be noted that, after the interface 109 shown in (g) in FIG. 10A is drawn in the background by the foldable mobile phone, the transparency of the snapshot 107 of the foldable mobile phone shown in (c) in FIG. 10 may not change to 0. In addition, after the interface 109 shown in (g) in FIG. 10A is drawn in the background by the foldable mobile phone, an interface of transition from the interface 109 shown in (g) in FIG. 10A to the interface 108 shown in (f) in FIG. 10A may continue to be drawn in the background. In some cases, when the transparency of the snapshot 107 of the foldable mobile phone shown in (c) in FIG. 10 changes to 0, an interface that is drawn in the background by the foldable mobile phone and that is of transition from the interface 109 shown in(g) in FIG. 10A to the interface 108 shown in (f) in FIG. 10A may be displayed by using the special-shaped screen.

Certainly, in the interface, the user is used as a reference object, and a display direction of an image is a direction between a leftward direction of an image in the interface 109 shown in (g) in FIG. 10A and an upward direction of an image in the interface 108 shown in (f) in FIG. 10A, and is generally located in a middle position of the image display area 103.

Then, with reference to FIG. 10B, it is described that the foldable mobile phone draws and displays a rotation animation of transition from a start interface shown in (d) in FIG. 10A to an end interface shown in (j) in FIG. 10B.

As described above, in (f) in FIG. 10A, the end interface 108 of the rotation animation is displayed. In (j) in FIG. 10B, the end interface 108 is drawn by the foldable mobile phone again, and an interface display on the display after drawing of the end interface 108 is completed is shown. As shown in (j) in FIG. 10B, the interface 108 includes an image 101c and three controls: an add to favorites control, a return control, and a delete control. The image 101c is located in the image display area 103, and the three controls: the add to favorites control, the return control, and the delete control, are located in the menu display area 102. A size of a view of the image 101c is the same as a size of the image display area 103.

It should be noted that FIG. 10B shows an example of two interfaces in a rotation animation of transition from the start interface shown in (d) in FIG. 10A to the end interface shown in (k) in FIG. 10B, but this does not constitute a limitation on a rotation animation display interface.

As shown in (h) in FIG. 10B, the special-shaped screen of the foldable mobile phone displays the interface 110. The interface 110 includes an image 101e and three controls: an add to favorites control, a return control, and a delete control. The image 101e is located in the image display area 103, and the three controls: the add to favorites control, the return control, and the delete control, are located in the menu display area 102. In (h) in FIG. 10B, the user is used as a reference object, the image 101e is displayed in a first upper-left direction, and the first upper-left direction may be understood as a direction in a process of transition from a leftward direction to an upward direction. A size of a view of the image 101e is the same as a size of the image display area 103.

As shown in (i) in FIG. 10B, the special-shaped screen of the foldable mobile phone displays the interface 111. The interface 111 includes an image 101f and three controls: an add to favorites control, a return control, and a delete control. The image 101f is located in the image display area 103, and the three controls: the add to favorites control, the return control, and the delete control, are located in the menu display area 102. In (i) in FIG. 10B, the user is used as a reference object, the image 101f is displayed in a second upper-left direction, the second upper-left direction may be understood as another direction in a process of transition from the leftward direction to the upward direction, and the second upper-left direction is closer to the upward direction. A size of a view of the image 101f is the same as a size of the image display area 103. The first upper-left direction and the second upper-left direction may be understood as a third direction.

It should be noted that a plurality of interfaces that are drawn by the foldable mobile phone and that are in a process of transition from the start interface shown in (d) in FIG. 10A to the end interface shown in (j) in FIG. 10B each include: drawing an image and a menu control displayed on the interface. Drawing the image displayed on the interface may be understood as: drawing the image on a view based on a calculated display position of the image, and the view does not change. Drawing the menu control may be understood as that the menu control is controlled to rotate from -90° to 0°, which is the same as a rotation direction of the image.

It should be further noted that the interface 108 shown in (f) in FIG. 10A is drawn in the background by the foldable mobile phone, and the special-shaped screen displays the window animation obtained based on the interface snapshot 107 shown in (c) in FIG. 10A, to avoid a screen flickering problem caused because the special-shaped screen directly displays (f) in FIG. 10A after (b) in FIG. 10A is displayed.

In addition, in a process in which the foldable mobile phone displays, based on the window animation, the interface snapshot 107 shown in (c) in FIG. 10A, when the transparency of the interface snapshot 107 approaches 0, the plurality of interfaces that are drawn by the foldable mobile phone and that are in a process of transition from the start interface shown in (d) in FIG. 10A to the end interface shown in (j) in FIG. 10B are gradually visible to the user.

In the foregoing content, the image 101a, the image 101b, the image 101c, the image 101d, the image 101e, and the image 101f may be understood as including same image content.

The interface 109, the interface 110, the interface 111, and the interface 108 may be understood as a same interface, but content of the interface changes, which may be referred to as a second interface.

With reference to FIG. 11, the following describes a rotation animation in the image display area during transition from the start interface shown in (d) in FIG. 10A to the end interface shown in (j) in FIG. 10B.

Similar to (f) in FIG. 6, (f) in FIG. 11 also shows an example that when the special-shaped screen of the foldable mobile phone displays the image 101a in a posture of portrait 0°, a size of the image 101a is the same as a size of a view 104 of the image 101a. Similarly, in consideration of convenient drawing, in (a) in FIG. 11, the image 101a and the view 104 that have the same size are drawn into one layer to indicate the view 104 in which the image 101a is displayed. However, this does not constitute a limitation on meanings of the image 101a and the view 104.

The foldable mobile phone displays the image at portrait 0°. The view 104 is as shown in (a) in FIG. 11, and an angle is 0°.

The user controls the foldable mobile phone to rotate by 90° counterclockwise from portrait 0°. In response to the operation, the foldable mobile phone maintains the view 104 unchanged, and the angle is still 0°. Because the foldable mobile phone rotates by 90° counterclockwise from portrait 0°, the view 104 rotates by 90° counterclockwise as shown in (b) in FIG. 11. In addition, the foldable mobile phone further records a display angle, a scaling ratio, and an offset of the image 101d in the view 104 shown in (b) in FIG. 11. It may be learned that, the display angle, the scaling ratio, and the offset of the image 101d in the view 104 shown in (b) in FIG. 11 may be used to indicate a display position of the image 101d in the view 104 shown in (b) in FIG. 11. The display position may include a display area and a display direction.

It should be noted that the foldable mobile phone responds to that the screen rotates by 90° counterclockwise from portrait 0°, and the view 104 rotates by 90° counterclockwise as shown in (b) in FIG. 11 may be understood as: The foldable mobile phone draws the view 104 displayed in landscape mode, and an angle is usually set to 0°.

Then, the foldable mobile phone draws, in the background, the view 104 shown in (c) in FIG. 11 and the image 101c displayed in the view 104. In the diagram (c), the image 101c is circled by a dashed line box. Because the view 104 does not change, an angle of the view 104 is still 0°.

In addition, in response to that the screen rotates by 90° counterclockwise from portrait 0°, the foldable mobile phone usually sets the view 104 only once. Certainly, the setting is based on the size of the image display area. For details, refer to content in the following step S918. When the foldable mobile phone calculates a plurality of display positions in a process of transition from a display position shown in (b) in FIG. 11 to a display position shown in (c) in FIG. 11, the view 104 is not reset. In this way, it can be ensured that a size of the view 104 can be the same as that of the image display area, and can be full of the image display area. Therefore, when the user performs a left-slide or right-slide operation on the image display area to switch the image, the foldable mobile phone may respond to the operation.

As shown in (c) in FIG. 6, when the view 104 rotates clockwise by 90°, the size gradually decreases. Therefore, the foldable mobile phone sets the size of the view 104 for a plurality of times, and the size changes and the angle also changes. In this case, the view 104 is different from the image display area, cannot be full of the image display area, and cannot respond to a left-slide or right-slide operation performed by the user on the image display area. Further, after the size of the view 104 is scaled, setting the size of the view 104 does not actually take effect, and consequently, the size of the scaled view 104 is reset, so that an operation on the view 104 is the same as an operation on the image display area, and the operation is also invalid.

Certainly, the foldable mobile phone further records a display angle, a scaling ratio, and an offset of the image 101c in the view 104 shown in (c) in FIG. 11. It may also be learned that, the display angle, the scaling ratio, and the offset of the image 101c in the view 104 shown in (c) in FIG. 11 may also be used to indicate a display position of the image 101c in the view 104 shown in (c) in FIG. 11.

Then, the foldable mobile phone calculates a plurality of display positions in a process of transition from a display position shown in (b) in FIG. 11 to a display position shown in (c) in FIG. 11. Certainly, each display position is also indicated by a display angle, a scaling ratio, and an offset that are of the image in the view 104 and that are calculated by the foldable mobile phone.

For example, (d) and (e) in FIG. 11 show two display positions of the image in the view 104 in the foregoing transition process. Because the view 104 does not change, the angle is still 0°. For a display position of the image 101e in (d) in FIG. 11, refer to content in (h) in FIG. 10B. For a display position of the image 101f in (e) in FIG. 11, refer to content in (i) in FIG. 10B. Details are not described herein again.

When the foldable mobile phone draws the image in the view 104 based on the display angle, the scaling ratio, and the offset that are of the image in the view 104 and that are obtained through calculation each time, the foldable mobile phone completes display of the rotation animation in the image display area during transition from the start interface shown in (d) in FIG. 10A to the end interface shown in (j) in FIG. 10B.

The following describes the display method provided in the embodiments of this application with reference to a module in a software structure of an electronic device. Similarly, an application scenario of the display method described in the following is also as follows: A gallery application of a foldable mobile phone displays an image, and the foldable mobile phone switches, by using a rotation animation based on an operation of a user for adjusting from portrait device holding to landscape device holding, from displaying an image in portrait mode to displaying an image in landscape mode, but this does not constitute a limitation on the application scenario of the display method, and does not constitute a limitation on an executor of the display method.

As shown in FIG. 12A and FIG. 12B, a display method provided in an embodiment of this application includes the following steps.

S901. A foldable mobile phone is in a posture of portrait 0°, and a user inputs an operation of browsing an image 101 on a special-shaped screen.

The image 101 refers to the image 101a displayed in the image browsing interface shown in (a) in FIG. 10A. For example, a size of the image 101 is 1418×2520.

The foldable mobile phone is in a posture of portrait 0° and is in a folded state. The special-shaped screen of the foldable mobile phone is enabled for screen display.

In some embodiments, the user inputs an operation to start camera running, and a camera preview interface is displayed on the special-shaped screen. The user inputs an operation in the camera preview interface to shoot the image 101, where the image 101 is stored in a gallery application. The user operates a component linked to the gallery application in the camera browsing interface, to input the operation of browsing the image 101.

In some other embodiments, the user inputs an operation to start the gallery application, and the special-shaped screen displays an interface of the gallery application, where the interface displays a thumbnail of the image 101. The user selects the image 101 on the interface of the gallery application, to input the operation of browsing the image 101.

In this embodiment, an example in which the user operates a component linked to the gallery application in the camera browsing interface, to input the operation of browsing the image 101 is used for description.

S902. A window manager detects the operation that is of browsing the image 101 and that is input by the user, and sets a display angle to 0°.

The foldable mobile phone is in a posture of portrait 0°, the user inputs the operation of browsing the image 101, the window manager may monitor, based on a touch sensor or the like, the operation that is of browsing the image 101 and that is input by the user, and the window manager sets the display angle to 0°, that is, a display angle of a window is 0°.

In some embodiments, the special-shaped screen is enabled for screen display, that is, is controlled as a screen for displaying content. The window manager may record a value of a parameter of a display manner of the foldable mobile phone, and the value of the parameter is used to indicate a screen for screen display.

In some other embodiments, the window manager may alternatively determine a posture of the foldable mobile phone based on components such as an acceleration sensor or a gyro sensor, to set a display angle of a window based on the determined posture. As described in step S901, the foldable mobile phone is in a posture of portrait 0°, the window manager determines, by using the acceleration sensor, the gyro sensor, or the like, that the foldable mobile phone is in a posture of portrait 0°, and sets the display angle of the window to 0°.

S903. The window manager starts Gallery for running.

After the window manager detects the operation that is of browsing the image 101 and that is input by the user, because the image 101 is stored in the gallery and needs to be displayed by using the gallery application, the window manager may further start Gallery for running.

It should be noted that in a scenario in which the user inputs the operation of browsing the image 101 on the interface of the gallery application, the gallery application is in a started state, and this step may not be performed.

S904. An activity component controls the window manager to set a window animation.

Gallery is started for running. The activity (active) component of Gallery sets a type of the window animation to the window manager, for example, the window animation is of a fade-in fade-out animation type, and the window manager configures a parameter of the window animation of the type based on the type of the window animation.

S905. A presenter component obtains a display angle lastDegree=0° from the window manager.

S906. The presenter component records the display angle lastDegree=0°.

The gallery application starts and runs, and the presenter (presenter) component of the gallery application is initialized. After initialization, the display angle of the window is obtained from the window manager, and the display angle of the window is recorded. As described in step S902, the display angle of the window set by the window manager is 0°. Based on this, the display angle recorded by the presenter component is lastDegree=0°.

S907. The View component sets a size of a view.

The user inputs the operation of browsing the image 101 by using step S901, and the foldable mobile phone needs to display the image 101 on the special-shaped screen, that is, display a browsing interface of the image 101. To display the browsing interface of the image 101 on the special-shaped screen, the View component of the gallery application needs to create a view of the browsing interface of the image 101. As shown in (a) in FIG. 10A, the menu display area 101 in the browsing interface of the image 101 displayed on the special-shaped screen is used to display a menu, and the image display area 102 is used to display the image 101. That is, the view of the browsing interface of the image 101 may be understood as a view of a parent layout, and includes a child view of the menu display area and a child view of an area for displaying the image 101.

Creating the view of the browsing interface of the image 101 includes setting a size of the view of the browsing interface of the image 101, that is, setting a size of the view of the parent layout. The View component includes a parent layout viewpager (that is, a layout manager of the parent layout), which may set the size of the view of the parent layout according to a size of the special-shaped screen, for example, width x height is 1080 x 1200. For example, the size of the view of the parent layout is: width x height is 1092 x 1200.

A height of the child view of the area for displaying the image 101 is the same as a height of the view of the parent layout, and a width of the child view of the area for displaying the image 101 is less than a width of the view of the parent layout. The parent layout viewpager may further set a difference between a left side of the child view of the area for displaying the image 101 and a left side of the view of the parent layout, that is, a width difference between the child view of the area for displaying the image 101 and the view of the parent layout. The View component sets a size of the child view of the area for displaying the image 101 based on a difference between left margins set by the parent layout viewpager. For example, the difference between the left margins set by the parent layout viewpage is 417, and the size of the child view of the area for displaying the image 101 is: width x height is 675 x 1200.

Certainly, the child view of the menu display area also needs to be created, but this is not described because the child view is not a focus of the embodiments of this application.

The gallery application further includes a browser component, configured to manage a view and data, to switch, in response to a left-slide or right-slide operation input by the user in the interface of the gallery application, the image displayed on the special-shaped screen.

S908. The View component calculates and records a scaling ratio and an offset of the image 101, and record the display angle 0° of the image 101.

The width and the height of the image 101 may not match the width and the height of the child view of the area for displaying the image 101. Based on this, the image 101 needs to be adjusted. In some embodiments, an onDraw (drawing) component of the View component calculates the scaling ratio and the offset of the image 101. The onDraw component may adjust the size of the image 101 by using the scaling ratio, and adjust, by using the offset, a display position of the image 101 in the child view for displaying the image 101.

In some embodiments, a calculation manner of the scaling ratio of the image includes:

A width ratio widthRatio of the child view of the area for displaying the image 101 to the image 101 is calculated based on formula 1.

$$\text{Formula 1}$$

$$widthRatio = viewWidth/imageWidth$$

In formula 1, viewWidth indicates the width of the child view of the area for displaying the image 101, and imageWidth indicates the width of the image 101.

A height ratio heightRatio of the child view of the area for displaying the image 101 to the image 101 is calculated based on formula 2.

$$\text{Formula 2}$$

$$heightRatio = viewHeight/imageHeight$$

In formula 2, viewHeight indicates the height of the child view of the area for displaying the image 101, and imageHeight indicates the height of the image 101.

Based on formula 3, a scaling ratio currentScale of the image 101 is obtained, that is, a smaller value in the width ratio and the height ratio is selected.

$$\text{Formula 3}$$

$$currentScale = Math.min(widthRatio, heightRatio)$$

It may be understood that, that the aspect ratio of the child view of the area for displaying the image 101 is 16:9 is used as an example, and a calculation rule of the scaling ratio of the image is as follows:

1. The aspect ratio of the image is 16:9, and the scaling ratio of the image satisfies that a scaled size of the image is the same as the size of the view, as shown in (a) and (c) in FIG. 2.
2. The aspect ratio of the image is greater than 16:9, and the scaling ratio of the image satisfies that a display height of the image is full of the height of the view, as shown in FIG. 3.
3. The aspect ratio of the image is less than 16:9, and the scaling ratio of the image satisfies that a display width of the image is full of the width of the view, as shown in FIG. 4.

In some application scenarios, after the image is scaled, the image is not fully adapted to the child view of the area for displaying the image 101. The height of the scaled image is the same as the height of the child view of the area for displaying the image 101, but the widths of the two are different, or the height of the scaled image is the same as the width of the child view of the area for displaying the image 101, but the heights of the two are different. To enable the image to be displayed in the middle in the child view of the area for displaying the image 101, the offset of the image needs to be calculated.

In some embodiments, a calculation manner of the offset translate(x, y) of the image includes: separately calculating offsets of the image on the x-axis and the y-axis based on formula 4.

$$\text{Formula 4}$$

$$x = (\text{viewWidht} - \text{imageWidth} \times \text{currentScale})/2$$

$$y = (\text{viewHeight} - \text{imageHeight} \times \text{currentScale})/2$$

It may be learned from step S905 that the display angle recorded by the presenter component is lastDegree=0°. In this way, the display angle of the image 101 recorded by the View component is also 0°. That is, the View component records the display angle of the image 101 based on the display angle recorded by the presenter component.

In the foregoing example, the size of the image 101 is: width $\times$ height is 1418 $\times$ 2520. The size of the view of the area for displaying the image 101 is: width $\times$ height is 675 $\times$ 1200. The scaling ratio of the image 101 is currentScale = 0.47619048 (there is an error), and the offset is translate = (0, 0).

S909. When the View component determines that there is no animation, determine a display position of the image 101 in the child view based on the display angle, the scaling ratio, and the offset of the image 101. The child view refers to the child view of the area for displaying the image 101.

Because the foldable mobile phone is currently in a phase of displaying the browsing interface of the image 101, the foldable mobile phone does not rotate, and the View component determines that there is no animation. In some embodiments, the View component may determine whether there is an animation based on whether an animation parameter is null. Certainly, if the parameter is null, there is no animation; otherwise, there is an animation.

The animation mentioned in this embodiment may be referred to as a rotation animation. The rotation animation refers to that the user rotates the foldable mobile phone, and the foldable mobile phone displays an animation of transition from the interface 109 shown in (d) in FIG. 10A to the interface 108 shown in (j) in FIG. 10B.

In some embodiments, a manner in which the View component determines the display position of the image 101 in the child view based on the display angle, the scaling ratio, and the offset of the image 101 includes:

1. Calculate a center point of the display position of the image 101 in the child view based on formula 5.

$$\text{Formula 5}$$

$$\text{resultTranslate.x} = (\text{currentScale} \times \text{imageWidth}/2)$$

$$\text{resultTranslate.Y} = (\text{currentScale} \times \text{imageHeight}/2)$$

2. Offset, based on the offset of the image 101, the center point of the display position of the image 101 in the child view, that is, canvas.translate(resultTranslate.x, resultTranslate.Y).

3. Rotate a canvas canvas.rotate(curentRotation) based on the display angle of the image 101, where the canvas refers to the display position of the image 101 in the child view.

A component that performs the action in step S909 may be the onDraw component in the View component.

It should be noted that, that the View component determines the display position of the image 101 in the child view based on the display angle, the scaling ratio, and the offset of the image 101 is an implementation of determining the display position of the image 101 in the child view. It may be learned that the View component may alternatively determine the display position of the image 101 in the child view based on another parameter.

S910. The doFream component draws and displays an interface shown in (a) in FIG. 10A by using a display.

The doFream (drawing refresh) component draws the view of the browsing interface of the image 101, and draws the image 101 based on the scaling ratio and the offset in the image display area of the view of the image 101. After the drawing is completed and screen display is performed, the special-shaped screen may display the interface shown in **(a) in FIG. 10A**.

It should be noted that step S902 to step S910 may be understood as follows: The foldable mobile phone initializes the view of the browsing interface of the image 101 in response to the operation that is of browsing the image 101 and that is input by the user, and draws and displays an initial status of the view of the browsing interface of the image 101.

S911. The use inputs an operation of rotating the screen by 90° counterclockwise.

The user adjusts the holding manner of the foldable mobile phone, and controls the foldable mobile phone to rotate by 90° counterclockwise. Correspondingly, the special-shaped screen switches from portrait display to landscape display.

It should be noted that, after switching from displaying the image 101 in portrait mode to displaying the image 101 in landscape mode, the special-shaped screen should first present the interface shown in (b) in FIG. 10A, and then the special-shaped screen displays an animation of transition from (d) in FIG. 10A to (j) in FIG. 10B. The following step S912 to step S921 are an implementation solution of presenting the interface shown in (b) in FIG. 10A and drawing (f) in FIG. 10A in the background after the special-shaped screen switches from displaying the image 101 in portrait mode to displaying the image 101 in landscape mode. Step S922 to step S927 are an implementation solution in which the special-shaped screen displays the animation of transition from (d) in FIG. 10A to (j) in FIG. 10B.

S912. The window manager detects an operation that is of rotating the screen by 90° counterclockwise and that is input by the user, and sets a display angle to 90°.

The window manager may determine, based on components such as an acceleration sensor and a gyro sensor, that the foldable mobile phone is rotated by 90 degrees counterclockwise. Based on this, the window manager sets a display angle of a window to 90°.

It should be noted that the user rotates the screen counterclockwise but does not rotate to 90° and then rotates back clockwise. In this scenario, the window manager does not record that the display angle of the window is 90°.

In addition to setting the display angle of the window to 90°, the window manager further triggers the gallery application to perform system callback onConfigChange to perform the following step S914, step S915 to step S917, step S918, and step S920.

It should be further noted that, before the window manager triggers the gallery application to perform system callback onConfigChange, it may be further determined that the foldable mobile phone has the special-shaped screen and the special-shaped screen is enabled for running. In some embodiments, the window manager may determine, based on a configuration parameter of the foldable mobile phone, whether the foldable mobile phone has the special-shaped screen, and further determine, based on a value of a parameter that records a display manner of the foldable mobile phone, whether the special-shaped screen is enabled for running.

In this embodiment of this application, that the user rotates the screen by 90° counterclockwise is used as an example for description. However, this does not constitute a limitation on setting the window display angle in this solution. It can be learned that the user rotates the screen by 180° counterclockwise, and the window manager sets the display angle of the window to 180°.

S913. The window manager obtains a snapshot of the interface displayed on the display, and displays an interface shown in (c) in FIG. 10A by using the display

After the user controls the screen to rotate by 90° counterclockwise, the special-shaped screen displays the interface in (a) in FIG. 10A. After following rotation, (b) in FIG. 10A is displayed. The window manager captures the interface displayed in (b) in FIG. 10A to obtain an interface snapshot, and then displays the interface snapshot, where the window manager may display the interface snapshot in a window animation manner by using the following step S916.

In some other embodiments, the window manager may alternatively capture the interface displayed on the special-shaped screen in a process in which the screen rotates by 90 90° counterclockwise, to obtain the interface snapshot.

In some embodiments, that the window manager displays the interface snapshot on the display may be understood as follows: The window manager creates another view view, where the view has a same size as the image display area, and is used to draw the interface snapshot.

S914. The presenter component obtains a display angle curentRotation=90° from the window manager.

S915. The presenter component records the display angle curentRotation=90°.

The presenter component performs system callback onConfigChange, to obtain and record the display angle curentRotation=90° of the window from the window manager.

S916. The window manager starts the window animation for 100 ms.

As described in step S904, the window manager is configured with an animation parameter, and after the window manager sets the display angle of the window to 90°, the window animation corresponding to the parameter is started, to display the interface snapshot by using the window animation corresponding to the animation parameter. For example, duration of the started window animation is 100 ms, and 100 ms may be referred to as second duration.

The window animation may be of a fade-in fade-out type, to control transparency of the interface snapshot to gradually transition from 1 to 0, so that the interface snapshot slowly transitions from non-transparent to transparent. Certainly, 1 and 0 are example values.

When the transparency of the interface snapshot changes to 0, the window manager may discard the interface snapshot.

It should be noted that, after the user rotates the screen by 90° counterclockwise, the special-shape screen displays the window animation. In a window animation display process, the foldable mobile phone performs the following steps S917 to S921, draws a window in the background, and does not display the drawn window on the special-shaped screen. In this way, it can be ensured that the user rotates the screen by 90°, and the special-shaped screen directly displays the interface shown in (f) in FIG. 10A drawn in the following steps S917 to S921, which causes a problem of screen flickering.

An execution sequence of step S913, step S914, and step S916 is not limited to the sequence shown in FIG. 12A and FIG. 12B.

S917. The presenter component calculates an animation start angle -90°, and record a start scaling ratio and a start offset.

After the user rotates the screen by 90° counterclockwise, the interface displayed on the special-shaped screen follows the screen to rotate by 90°. The presenter needs to calculate a window display angle at a start moment of the animation, which is referred to as an animation start angle, and further needs to record a start scaling ratio and a start offset of the image 101. The interface displayed on the special-shaped screen rotates following the screen, but the interface is not re-drawn. Therefore, the start scaling ratio and the start offset of the image 101 in the interface displayed on the special-shaped screen should be the same as the scaling ratio and the offset of the image 101 before screen rotation.

In some embodiments, a manner in which the presenter component calculates the animation start angle is: obtaining a display angle lastRotation before screen rotation and a display angle curentRotation after screen rotation. The following rule is used to obtain the animation start angle.

In a scenario of rotation from 270° to 0°, that is, when the display angle before rotation is 270°, and the display angle after rotation is 0°, the animation start angle animRotation = -90.

In a scenario of rotation from 0° to 270°, that is, when the display angle before rotation is 0°, and the display angle after rotation is 270°, the animation start angle animRotation = 90.

In another scenario, animation start angle animRotation = lastRotation - currentRotation.

The animation start angle may further indicate a rotation direction, a negative value indicates counterclockwise rotation, and a positive value indicates clockwise rotation.

The screen is adjusted by the user from portrait 0° display to landscape 90° display. Therefore, the initial scaling ratio and offset of the image 101 in the animation should be the scaling ratio and the offset when the image 101 is displayed before the screen rotates. Based on this, the start scaling ratio and the start offset of the image 101 recorded by the presenter component are a scaling ratio and an offset when the image 101 is displayed in portrait mode.

In the foregoing example, the start angle of the image 101 calculated by the presenter component is -90°, the start scaling ratio of the image 101 is 0.47619048, and the start offset is (0, 0).

It should be noted that after calculating the animation start angle and recording the start scaling ratio and the start offset, the presenter component may further send a message with a delay of 50 ms to a handler (organizer). 50 ms is only an example, and may be referred to as first duration. A purpose of sending, by the presenter component, the message with the delay of 50 ms to the handler is to wait for the View component to complete, by using the delay duration, the view of the browsing interface of the image 101 at the end of the animation.

It should be further noted that, after calculating the animation start angle and recording the start scaling ratio and the start offset, the presenter component may further trigger re-drawing of the view. In some embodiments, a manner in which the presenter component triggers view re-drawing of the image 101 is to set a flag invalidate for the view of the browsing interface of the image 101. In this way, when determining that a screen refresh moment is reached, the doFream component draws the view of the browsing interface of the image 101 based on the flag invalidate.

A size of the re-drawn view of the browsing interface of the image 101, a scaling ratio and an offset when the image 101 is displayed in the child view, and a display angle of the image 101 are obtained in the following steps S918 and S919. It can be learned that the View component may perform the following step S918 and step S919 within the foregoing proposed delay duration.

S918. The View component sets a size of the view.

The special-shaped screen switches from portrait display to landscape display, and a window on the special-shaped screen for displaying the image 101 is a horizontal window. Therefore, the View component needs to reset the size of the view of the browsing interface of the image 101, that is, set the size of the window for displaying the image 101 in landscape mode. In some embodiments, the parent layout viewpager sets the size of the horizontal window. For example, the size of the view (that is, the view of the parent layout) of the browsing interface of the image 101 is: width x height is 1200 x 1092.

When the image 101 is displayed in landscape mode, a width of the child view of the area for displaying the image 101 is the same as a width of the view of the parent layout, and a height of the child view of the area for displaying the image 101 is less than a height of the view of the parent layout. The parent layout viewpager may further set a difference between a bottom side of the child view of the area for displaying the image 101 and a bottom side of the view of the parent layout, that is, a height difference between the child view of the area for displaying the image 101 and the view of the parent layout. The View component sets a size of the child view of the area for displaying the image 101 based on a difference between bottom sides set by the parent layout viewpager. For example, the difference between the bottom sides set by the parent layout viewpage is 417, and the size of the view of the area for displaying the image 101 is: width x height is 1200 x 675.

S919. The View component calculates and records a scaling ratio and an offset of the image 101, and records the display angle 0° of the image 101.

The user rotates the screen by 90° counterclockwise. The special-shaped screen switches from portrait display to landscape display. The special-shaped screen displays the image 101 in landscape display mode, that is, a window for displaying the image 101 is a horizontal window. The View component needs to calculate a scaling ratio and an offset of the image 101 when the image 101 is displayed in the horizontal window. In addition, the special-shaped screen displays the image 101 in landscape display mode, and the image 101 is still displayed in a forward direction. In this case, the View component records the display angle of the image 101 as 0°.

In some embodiments, the presenter component calculates, by using formula 1 to formula 3, the scaling ratio of the image 101 when the special-shaped screen displays the image 101 in landscape display mode, and calculates the offset of the image 101 by using formula 4.

In the foregoing example, the scaling ratio of the image 101 is currentScale = 0.26785713, and the offset is translate = (410.0893, 0.0). The display angle is curentRotation = 0°.

S920. When the View component determines that there is no animation, determine a display position of the image 101 in the child view based on the display angle, the scaling ratio, and the offset of the image 101. The child view refers to the child view of the area for displaying the image 101.

The animation mentioned in step S920 may also be referred to as a rotation animation. The rotation animation refers to that the user rotates the foldable mobile phone, and the foldable mobile phone displays an animation of transition from the interface 109 shown in (d) in FIG. 10A to the interface 108 shown in (j) in FIG. 10B.

The animation is not set. Therefore, the View component determines that there is no animation. In addition, the View component determines a display position of the image 101 in the child view based on the display angle, the scaling ratio, and the offset of the image 101. A manner in which the View component determines the display position of the image 101 in the view based on the display angle, the scaling ratio, and the offset of the image 101 may be as described in the foregoing step S909, and details are not described herein again.

A component that performs the action in step S920 may be the onDraw component in the View component.

It should be noted that, that the View component determines the display position of the image 101 in the child view based on the display angle, the scaling ratio, and the offset of the image 101 is an implementation of determining the display position of the image 101 in the child view. It may be learned that the View component may alternatively determine the display position of the image 101 in the child view based on another parameter.

S921. The doFream component draws an interface shown in (f) in FIG. 10A in the background.

The doFream component draws the view for displaying the image in landscape mode and the image display area of the view for displaying the image in landscape mode, draws the image 101 based on the scaling ratio and the offset of the image 101, but does not display the image, and the special-shaped screen further continuously displays the window animation started by the window manager.

It may be understood that a reason why the interface shown in (f) in FIG. 10A that is drawn in the background by the doFream component is invisible to the user is that the view for displaying the image in landscape mode and the view that is used to draw the snapshot and that is created in step S913 are superposed and sent to the display, and are superposed in a direction perpendicular to the screen (that is, a Z-axis), and a Z-axis value of the view used to draw the snapshot is greater than a Z-axis value of the view for displaying the image in landscape mode. Because the view used to draw the snapshot is not transparent, the interface shown in(f) in FIG. 10A drawn in the background by the doFream component is blocked, and the user does not see the interface shown in(f) in FIG. 10A.

S922. After a delay of 50 ms, the presenter component records an animation end angle 0°, an end scaling ratio, and an end offset, and sets an animation.

After the delay of 50 ms, the handler component receives a message sent by the presenter component. After receiving the message, the handler component controls the presenter component to record the animation end angle and the end scaling ratio and the end offset of the image 101 in the animation. The screen is switched from portrait display to landscape display, and the image 101 displayed on the special-shaped screen needs to be transitioned from (d) in FIG. 10A to (j) in FIG. 10B. The image 101c shown in (j) in FIG. 10B presents a display effect at portrait 0°. Therefore, the animation end angle is 0°, and the animation end angle may be understood as a display angle of the image 101 at the end of the animation. In addition, the screen rotates to landscape, and the image 101c is displayed in landscape mode. Therefore, when the image 101 is displayed in the horizontal display window obtained through calculation in step S919, the scaling ratio and the offset of the image 101 are the scaling ratio and the offset of the image 101 at the end of the animation.

In the foregoing example, the end angle of the image 101 is 0°, the end scaling ratio of the image 101 is 0.26785713, and the end offset of the image 101 is (410.0893, 0.0).

The presenter component records the animation start angle, and the start scaling ratio and offset of the animation by using step S917, and further records the animation end angle, the end scaling ratio, and the end offset by using step S922. Therefore, the presenter component can set the animation. In some embodiments, a manner of setting the animation by the presenter component includes: setting an animation parameter, so that the parameter is not null. The presenter component may further record animation setting time, that is, animation start time.

The animation mentioned in this step may be understood as a process in which the image 101 is drawn in the view of the image 101 based on the display angle, the scaling ratio, and the offset of the image 101 within specific duration.

S923. When the View component determines that there is an animation, in a process in which animation execution duration does not reach total animation duration, calculate a display angle, a scaling ratio, and an offset of the image 101 corresponding to each time of drawing in an animation process.

As described in S922, the presenter component sets the animation, and therefore, the View component determines that the animation exists. Further, the View component needs to construct the animation. It may be learned from the definition of the animation that the animation includes a plurality of times of drawing of the image 101 based on the display angle, the scaling ratio, and the offset of the image 101 within specific duration. Constructing the animation may be understood as obtaining the display angle, the scaling ratio, and the offset of the image 101 corresponding to each time of drawing within specific duration, and the specific duration refers to animation execution duration.

In some embodiments, a manner in which the View component calculates a display angle, a scaling ratio, and an offset of the image 101 corresponding to one time of drawing in an animation process is shown in FIG. 13, and includes the following steps.

S1001. Calculate animation execution duration runingTime.

runingTime = system current time System.currentTimeMillis() - animation start time anim.time. The animation start time is as described in the foregoing step S922, and is recorded after the animation is set by the presenter component.

The animation execution duration should be less than or equal to total animation duration. For example, the total animation duration is set to duration = 250 ms. Therefore, a value range of the animation execution duration runingTime is 0 ~ 250.

S1002. Calculate a total change amount of the scaling ratio, and calculate, based on the total change amount, a scaling ratio corresponding to one time of drawing.

Total change amount of the scaling ratio: change = end scaling ratio anim.scaleEnd - start scaling ratio anim.scaleStart. The start scaling ratio and the end scaling ratio are recorded by the presenter component as described in step S917 and step S922.

Scaling ratio corresponding to one time of drawing: scaleCurrent = ease(runingTime, scaleStart, change, duration) = getInterpolation(runingTime/duration) × change + startValue.

getInterpolation(runingTime/duration) refers to a change rate of the scaling ratio returned using an interpolator; getInterpolation(runingTime/duration) × change refers to a product of the change rate of the scaling ratio and the total change amount, that is, an amount of change of the scaling ratio corresponding to the current drawing; and startValue refers to the start scaling ratio. Certainly, from the second drawing, startValue refers to a scaling ratio corresponding to previous drawing.

The scaling ratio of the image corresponding to each time of drawing is within 0.47619048~0.26785713.

S1003. Calculate a total change amount of the display angle, and calculate, based on the total change amount, a display angle corresponding to one time of drawing.

Total change amount of the display angle: change = end angle anim.rotateEnd - start angle anim.rotateStart. The start angle and the end angle are recorded by the presenter component as described in step S917 and step S922.

Display angle corresponding to one time of drawing: rotation = ease(runingTime, anim.rotateStart, chang, duration) = getInterpolation(runingTime/duration) × change + startValue.

getInterpolation(runingTime/duration) refers to a change rate of the display angle returned using an interpolator; getInterpolation(runingTime/duration) × change refers to a product of the change rate of the display angle and the total change amount of the display angle, that is, an amount of change of the display angle corresponding to the current drawing; and startValue refers to the start angle. Certainly, from the second drawing, startValue refers to a display angle corresponding to previous drawing.

The display angle of the image corresponding to each time of drawing is within -90 ~ 0.

S1004. Calculate a total change amount of the offset, and calculate, based on the total change amount of the offset, an offset corresponding to one time of drawing.

Total change amount of the offset:

Total change amount of the offset on the x-axis changeX = end offset on the x-axis rotationTransEnd.x - start offset on the x-axis rotationTransStart.x.

Total change amount of the offset on the y-axis changeY = end offset on the y-axis rotationTransEnd.y - start offset on the y-axis rotationTransStart.y.

Offset corresponding to one time of drawing:

Offset on the x-axis corresponding to one time of drawing ranslateX = ease(scaleElapsed, TanslateStart.x, changeX, duration) = getInterpolation(runingTime/duration) $\times$ change + startValue. A range is 0 ~ 410.0893.

getInterpolation(runingTime/duration) refers to a change rate of the offset on the x-axis returned using an interpolator; getInterpolation(runingTime/duration) $\times$ change refers to a product of the change rate of the offset on the x-axis and the total change amount of the offset on the x-axis, that is, an amount of change of the offset on the x-axis corresponding to the current drawing; and startValue refers to the start offset on the x-axis. From the second drawing, startValue refers to an offset on the x-axis corresponding to previous drawing.

Offset on the y-axis corresponding to one time of drawing ranslateY = ease(scaleElapsed, TanslateStart.y, changeY, duration) = getInterpolation(runingTime/duration) $\times$ change + startValue. A range is 0 ~ 0.

getInterpolation(runingTime/duration) refers to a change rate of the offset on the y-axis returned using an interpolator; getInterpolation(runingTime/duration) $\times$ change refers to a product of the change rate of the offset on the y-axis and the total change amount of the offset on the y-axis, that is, an amount of change of the offset on the y-axis corresponding to the current drawing; and startValue refers to the start offset on the y-axis. From the second drawing, startValue refers to an offset on the y-axis corresponding to previous drawing.

It should be noted that an execution sequence of step S1002 to step S1004 is not limited to that shown in FIG. 13.

S1005. Determine whether the animation execution duration runingTime > total animation duration duration (250).

When it is determined that the animation execution duration is greater than the total animation duration, it indicates that the animation ends. In this case, an animation flag is set to null by using step S1006. In this way, after execution of current image drawing is completed, a display angle, a scaling ratio, and an offset of the image 101 corresponding to one time of drawing in the animation process are not calculated next time.

If it is determined that the animation execution duration is less than or equal to the total animation duration, a flag is set by using step S1007 to trigger image drawing. Further, when the animation execution duration is greater than the total animation duration, a flag also needs to be set by using step S1007, to trigger image drawing.

A component that calculates a display angle, a scaling ratio, and an offset of the image 101 corresponding to one time of drawing in the animation process shown in FIG. 13 may be the onDraw component in the View component.

S924. In the process in which the animation execution duration does not reach the total animation duration, the View component determines a display position of the image 101 in the view based on a display angle, a scaling ratio, and an offset of the image 101 corresponding to each time of drawing in the animation process.

The View component calculates a display angle, a scaling ratio, and an offset of the image 101 corresponding to one time of drawing in the animation execution process. The View component further determines the display position of the image 101 in the view based on the display angle, the scaling ratio, and the offset of image 101 corresponding to one time of drawing. A manner in which the View component determines the display position of the image 101 in the view based on the display angle, the scaling ratio, and the offset of the image 101 may be as described in the foregoing step S909, and details are not described herein again.

It should be noted that, that the View component determines the display position of the image 101 in the view based on the display angle, the scaling ratio, and the offset of the image 101 corresponding to each time of drawing in the animation process is an implementation of determining the display position of the image 101 in the view. It may be learned that the View component may alternatively determine the display position of the image 101 in the view based on another parameter.

S925. In response to a 100 ms window animation, the window manager gradually changes transparency of the snapshot from 1 to 0.

As described in the foregoing step S916, in response to a 100 ms window animation, the window manager gradually changes transparency of the displayed interface snapshot from 1 to 0. In this way, it can be ensured that the interface drawn by the doFream component by using step S926 is visible to the user. Certainly, 100 ms is an example of the window animation duration.

An execution sequence of step S925 and step S926 is not limited to the sequence shown in FIG. 12A and FIG. 12B.

S926. The doFream component sequentially draws interfaces shown in (d) in FIG. 10A to (j) in FIG. 10B based on the display position of the image.

S927. In a process in which transparency of the window animation changes to 0, (x) in FIG. 10A to (j) in FIG. 10B that are drawn by the doFream component gradually become visible, where x may be (d) in FIG. 10A or a subsequent diagram thereof.

After the View component obtains the display position of the image 101 in the view corresponding to each time of drawing in the animation process, a flag invalidate may also be set for the view corresponding to the image 101. In this way, when determining that a screen refresh moment is reached, the doFream component draws the view corresponding to the image 101 based on the flag invalidate.

In addition, the doFream component performs each time of drawing and screen display in the animation process, and the special-shaped screen may display the animation from (d) in FIG. 10A to (j) in FIG. 10B.

It should be noted that the window manager starts the window animation of 100 ms by using step S916. After the window animation starts for 50 ms, the foldable mobile phone sets the animation by using the presenter component, and calculates, by using the View component, a display angle, a scaling ratio, and an offset of the image 101 corresponding to one time of drawing in the animation execution process. Actions of the presenter component and the View component also occupy specific duration. When the doFream component performs drawing based on the display angle, the scaling ratio, and the offset of the image 101 corresponding to one time of drawing in the animation execution process that are calculated by the View component, the window animation started by the window manager probably ends. In this way, drawing content of each time of the doFream component may be displayed by using the special-shaped screen, to present an animation from (d) in FIG. 10A to (j) in FIG. 10B.

Further, even if the window animation started by the window manager does not end when the doFream component performs drawing based on the display angle, the scaling ratio, and the offset of the image 101 corresponding to one time of drawing in the animation execution process that are calculated by the View component, the window animation is to end. Drawing content of the doFream component in previous several times is not displayed, that is, (d) in FIG. 10A and several subsequent frames of images may be invisible to the user, but this does not affect the user in perceiving that the special-shaped screen transitions from the interface in (d) in FIG. 10A to the interface in (j) in FIG. 10B.

In this embodiment of this application, in a scenario in which the special-shaped screen displays the image 101, the user controls the screen to switch from portrait 0° to landscape 90°. The foldable mobile phone performs, by using the View component, step S918 to step S920 to complete drawing of the horizontal display window. In this way, the view when the image 101 is displayed in landscape mode is obtained. In addition, the View component performs step S923 and step S924 to obtain the display angle, the scaling ratio, and the offset of the image 101 in a process of transition from the vertical display window to the horizontal display window. The foldable mobile phone draws, based on the display angle, the scaling ratio, and the offset of the image 101 by using the doFream component, the image 101 on the view when the image 101 is displayed in landscape mode. The view of the image 101 is not scaled, and is full of the image display area, to ensure a response to a left-slide or right-slide operation performed by the user on the image display area.

In addition, the View component obtains the display angle, the scaling ratio, and the offset of the image 101 in a process of transition from the portrait display window to the landscape display window, and the doFream component draws content based on the display angle, the scaling ratio, and the offset of the image 101. This also presents a transition effect of the image 101 from the portrait display window to the landscape display window, thereby ensuring that the image 101 is displayed in the middle and in a forward direction when the image 101 is displayed in landscape mode.

The foregoing content describes content of a scenario in which the display method provided in the embodiments of this application is applied to the special-shaped screen to display an image. In a scenario in which the special-shaped screen plays a video, when the screen rotates, a switching animation displayed on the special-shaped screen may also have a problem.

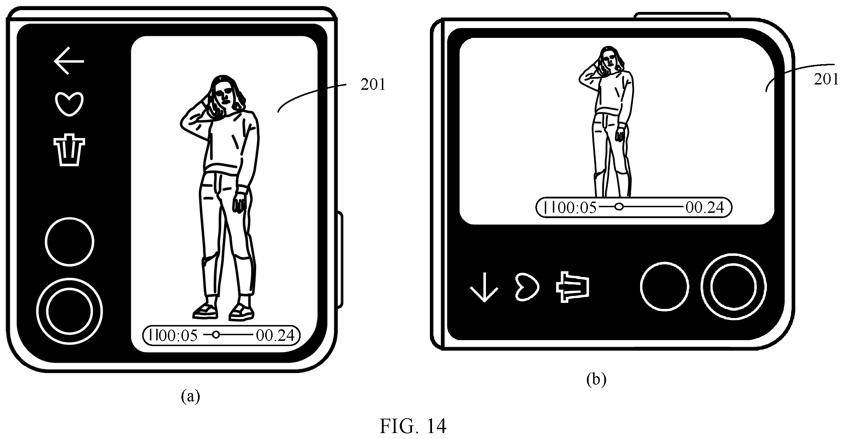

With reference to FIG. 14, the following describes a problem in a process in which the image display area of the special-shaped screen 100 is switched from portrait display to landscape display by using an example in which the foldable mobile phone adjusts from displaying an image at portrait 0° to playing a video at landscape 90°. However, this does not constitute a limitation on an application scenario in the solution.

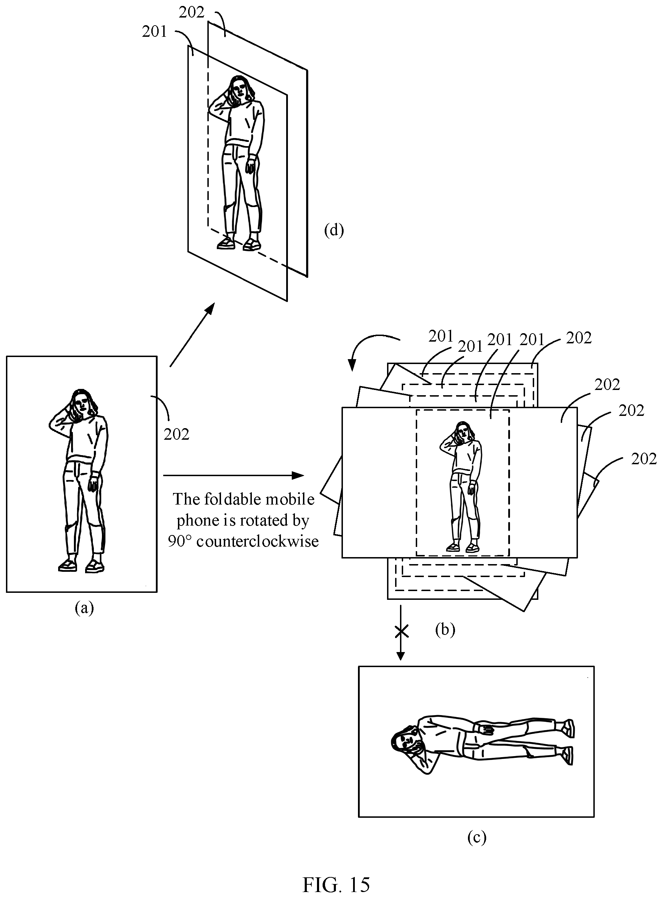

As shown in (a) in FIG. 14, the special-shaped screen of the foldable mobile phone displays a frame of image 201 in a video in a posture of portrait 0°. The user controls the foldable mobile phone to rotate by 90° counterclockwise. In response to the operation, the foldable mobile phone controls the view (view) for displaying the image 201 to rotate by 90° counterclockwise following the foldable mobile phone, as shown in (b) in FIG. 14. However, the image displayed in the view of the image 201 does not rotate. Descriptions are provided in the following with reference to FIG. 15.

First, it should be noted that (d) in FIG. 15 shows an example that when the special-shaped screen of the foldable mobile phone displays the frame of image 201 in the video in a posture of portrait 0°, a size of the image 201 is the same as a size of a view 202 of the image 201. For the purpose of convenient drawing, in (a) in FIG. 15, the image 201 and the view 202 of the image 201 that have the same size are drawn into one layer to indicate the view 202 in which the image 201 is displayed (referred to as a view 202 below). However, this does not constitute a limitation on meanings of the image 201 and the view 202 of the image 201.

It may be learned from the foregoing content corresponding to FIG. 6 that the user controls the foldable mobile phone to rotate by 90° counterclockwise from portrait 0°. In response to the operation, the foldable mobile phone needs to first control the view to rotate by 90° counterclockwise, that is, the foldable mobile phone responds to the operation of rotating by 90° counterclockwise from portrait 0°, and controls the view 202 shown in (a) in FIG. 15 to be adjusted to (c) in FIG. 15 in a manner shown in (b) in FIG. 15.

However, it is found through research that the view 202 may rotate counterclockwise. Although a size of video content, that is, the image 201, can be adjusted, the video content cannot be rotated, and is always displayed in a forward direction as shown in (b) in FIG. 15. In this case, the foldable mobile phone cannot obtain the view displaying the image in (c) in FIG. 15, and certainly, cannot continue to perform the process of (c) to (d) in FIG. 6, to complete a rotation animation.

An embodiment of this application further provides another display method, to resolve a problem that an animation of switching between landscape mode and portrait mode of an electronic device fails to be played in a scenario in which a video is played on a special-shaped screen.

The display method provided in this embodiment of this application may be applicable to an electronic device including a special-shaped screen, and a type of the electronic device may be diversified. This is not specifically limited. A component part of the electronic device is shown in FIG. 8, and a software structure is shown in FIG. 9. Details are not described herein again.

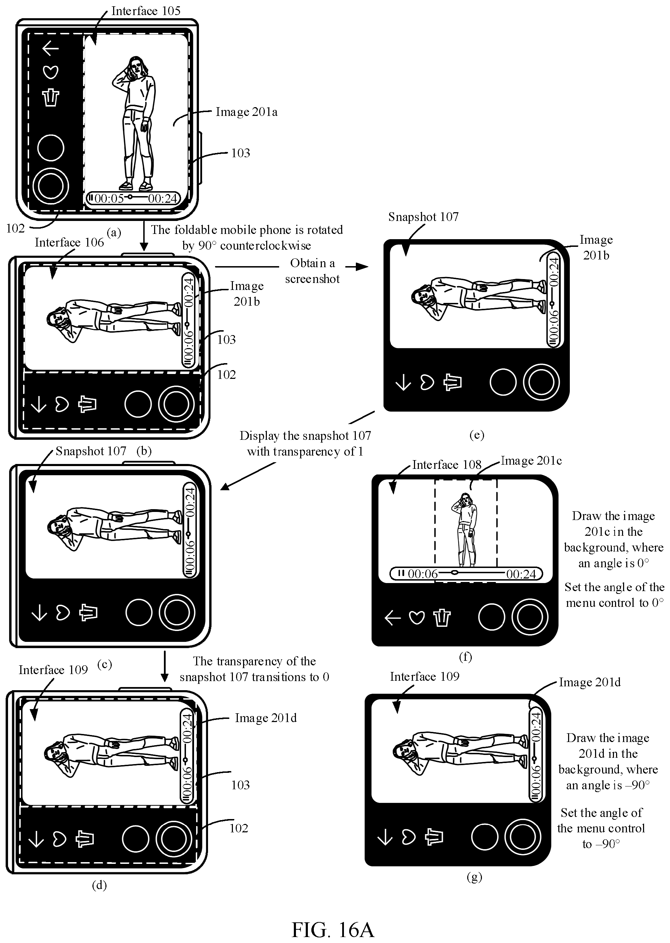

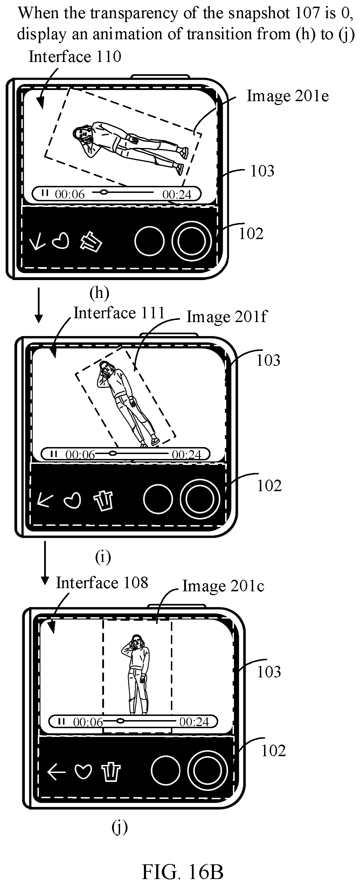

An implementation principle of the display method provided in this embodiment of this application is basically the same as content in FIG. 10A and FIG. 10B. Details are described herein with reference to FIG. 16A and FIG. 16B.

As shown in (a) in FIG. 16A, an interface 105 (which may be referred to as a first interface) is displayed on a special-shaped screen of a foldable mobile phone in a posture of portrait 0°. The interface 105 includes a frame of image 201a in a video and three controls: an add to favorites control, a return control, and a delete control. The image 201a is located in an image display area 103 (which may be referred to as a first area), and the three controls: the add to favorites control, the return control, and the delete control, are located in a menu display area 102 (which may be referred to as a second area). A hole area (represented by a circular hole in the figure) is further provided in the menu display area 102, to mount a camera. In (a) in FIG. 16A, the video may be in a playing process, a user is used as a reference object, and the image 201a in the video is displayed in an upward direction (which may be referred to as a first direction), and is generally located in a middle position of an image display area 103. A size of a view of the image 201a is the same as a size of the image 201a.

In some embodiments, the foldable mobile phone receives an operation performed on the add to favorites control, and may add a first image to a favorites album of a gallery. The foldable mobile phone receives an operation performed on the return control, and may display a previous-level interface of a first interface. The foldable mobile phone receives an operation performed on the delete control, and may delete the first image.

The user controls the foldable mobile phone to rotate by 90° counterclockwise (which may be referred to as a first rotation direction). In response to the operation, the foldable mobile phone displays an interface 106 in a posture of landscape 90°. The interface 106 may be understood as an interface after the interface 105 displayed in (a) in FIG. 16A is rotated by 90° counterclockwise. Because the video is in a playing process, after the user controls the foldable mobile phone to rotate by 90°, the video displayed on the interface 106 may change. As shown in (b) in FIG. 16A, the interface 106 includes another frame of image 201b of the video and three controls: an add to favorites control, a return control, and a delete control. The image 201b is located in the image display area 103, and the three controls: the add to favorites control, the return control, and the delete control, are located in the menu display area 102. In (b) in FIG. 16A, the user is used as a reference object, and the image 201b is displayed in a leftward direction (which may be referred to as a second direction), and is generally located in a middle position of the image display area 103. A size of a view of the image 201b is also the same as a size of the image 201b. The interface 106 shown in (b) in FIG. 16A is configured to provide interface content of a start interface of a rotation animation.

Then, the foldable mobile phone obtains an interface snapshot of the interface 106 shown in (b) in FIG. 16A, to obtain an interface snapshot 107 shown in (e) in FIG. 16A. Interface content of the interface snapshot 107 is the same as that of the interface 106 shown in (b) in FIG. 16A, and is not described herein again.

In addition, the foldable mobile phone further obtains a window animation based on the interface snapshot 107 shown in (e) in FIG. 16A. As shown in (c) in FIG. 16A, based on the window animation, the foldable mobile phone displays the interface snapshot 107 gradually transitioning from transparency of 1 to 0. For example, transition duration may be 100 ms. Certainly, 1 and 0 are example values. If the transparency of the interface snapshot 107 is 1, it indicates that the interface snapshot 107 is completely non-transparent. If the transparency of the interface snapshot 107 is 0, it indicates that the interface snapshot 107 is completely transparent. The interface snapshot 107 is completely transparent, and the foldable mobile phone may discard the interface snapshot 107.

It should be noted that, in a process in which the user rotates the foldable mobile phone, the video is continuously in a playing process. The foldable mobile phone displays a window animation based on the interface snapshot 107, and play of the video is interrupted. However, because duration of the window animation is relatively short and belongs to a millisecond level, video content before interruption and video content after interruption are basically the same, and the user basically does not perceive that play of the video is interrupted.

In a process in which the foldable mobile phone displays the window animation obtained based on the interface snapshot 107, the foldable mobile phone draws an interface 108 shown in (f) in FIG. 16A in the background. The interface 108 includes another frame of image 201c of the video, and three controls: an add to favorites control, a return control, and a delete control. In (f) in FIG. 16A, the image 201c circled by a dashed line box is displayed in an upward direction by using the user as a reference object, and a display angle may be understood as 0°. The interface 108 shown in (f) in FIG. 16A serves as an end interface of the rotation animation.

In(f) in FIG. 16A , the dashed line box is used to indicate the image 201c, and the dashed line box is actually not drawn by the foldable mobile phone. In addition, that the foldable mobile phone draws the three controls: the add to favorites control, the return control, and the delete control, in the interface 108 is not a focus of description in this embodiment, and therefore is not described. It may be understood that an angle of the three menu controls displayed in the menu display area may be set to 0° by the foldable mobile phone.

It should be noted that in the interface 108 shown in (f) in FIG. 16A , for the purpose of clearly showing the view of the image 201c in the interface 108, the interface 108 displays the view of the image 201c in white.

As described above, the interface 106 shown in (b) in FIG. 16A is used to provide interface content of a start interface of a rotation animation. Based on this, in a process in which the foldable mobile phone displays the window animation obtained based on the interface snapshot 107, the foldable mobile phone may draw, in the background based on the interface content of the interface 106 shown in(b) in FIG. 16A, an interface 109 shown in (g) in FIG. 16A, that is, the start interface of the rotation animation. The interface 109 includes another frame of image 201d of the video and three controls: an add to favorites control, a return control, and a delete control. In (g) in FIG. 16A, the user is used as a reference object, the image 201d is displayed in a leftward direction, and a display angle may be understood as -90°. An angle of the three menu controls displayed in the menu display area may be further set to -90° by the foldable mobile phone.

It should be noted that, that the foldable mobile phone draws, in the background, the interface 109 shown in (g) in FIG. 16A includes: An image 201d displayed in the interface 109 shown in(g) in FIG. 16A is drawn in the background, and a menu control displayed in the interface 109 shown in (f) in FIG. 16A is drawn in the background. That the image 201d displayed in the interface 109 shown in(g) in FIG. 16A is drawn in the background may be understood as follows: Based on a display position of the image 201b in the interface 106 shown in (b) in FIG. 16A, the another frame of image 201d of the video is drawn on a view, and the view does not change. It may be understood that background drawing is a drawing operation invisible to the user.

After the interface 109 shown in (g) in FIG. 16A is drawn in the background by the foldable mobile phone, and the transparency of the snapshot 107 transitions to 0, the interface is displayed on the special-shaped screen. As shown in (d) in FIG. 16A, the foldable mobile phone displays the interface 109. The interface 109 includes another frame of image 201d of the video and three controls: an add to favorites control, a return control, and a delete control. The image 201d is located in the image display area 103, and the three controls: the add to favorites control, the return control, and the delete control, are located in the menu display area 102. Using the user as a reference object, the image 201d is displayed in a leftward direction, and is usually located in a middle position of the image display area 103. A size of the view of the image 201d is the same as a size of the image display area 103.

Then, the foldable mobile phone draws and displays a rotation animation of transition from a start interface shown in (d) in FIG. 16A to an end interface shown in (j) in FIG. 16B.

As described above, in (f) in FIG. 16A, the end interface 108 of the rotation animation is displayed. In (j) in FIG. 16B, the end interface 108 is drawn by the foldable mobile phone again, and an interface display on the display after drawing of the end interface 108 is completed is shown. As shown in (j) in FIG. 16B, the interface 108 includes an image 201c and three controls: an add to favorites control, a return control, and a delete control. The image 201c is located in the image display area 103, and the three controls: the add to favorites control, the return control, and the delete control, are located in the menu display area 102. A size of a view of the image 201c is the same as a size of the image display area 103.

In addition, because the video is in a playing process, image content may change from the image 201c shown in (j) in FIG. 16B to the image 201d shown in (d) in FIG. 16A.

It should be noted that FIG. 16B shows an example of two interfaces in a rotation animation of transition from the start interface shown in (d) in FIG. 16A to the end interface shown in (j) in FIG. 16B, but this does not constitute a limitation on a rotation animation display interface.

As shown in (h) in FIG. 16B, the special-shaped screen of the foldable mobile phone displays the interface 110. The interface 110 includes another frame of image 201e of the video and three controls: an add to favorites control, a return control, and a delete control. The image 201e is located in the image display area 103, and the three controls: the add to favorites control, the return control, and the delete control, are located in the menu display area 102. In (h) in FIG. 16B, the user is used as a reference object, the image 201e is displayed in a first upper-left direction, and the first upper-left direction may be understood as a direction in a process of transition from a leftward direction to an upward direction. A size of a view of the image 201e is the same as a size of the image display area 103.

As shown in (i) in FIG. 16B, the special-shaped screen of the foldable mobile phone displays the interface 111. The interface 111 includes another frame of image 201f of the video and three controls: an add to favorites control, a return control, and a delete control. The image 201f is located in the image display area 103, and the three controls: the add to favorites control, the return control, and the delete control, are located in the menu display area 102. In (i) in FIG. 16B, the image 201f is displayed in a second upper-left direction, the second upper-left direction may be understood as another direction in a process of transition from the leftward direction to the upward direction, and the second upper-left direction is closer to the upward direction. A size of a view of the image 201f is the same as a size of the image display area 103. The first upper-left direction and the second upper-left direction may be understood as a third direction.

It should be noted that, in some cases, the interface 109 shown in (g) in FIG. 16Ais completely drawn in the background by the foldable mobile phone, and the transparency of the snapshot 107 does not transition to 0. After the foldable mobile phone draws, in the background, an interface between the interface 109 shown in (g) in FIG. 16A and the interface 108 shown in (f) in FIG. 16A, the transparency of the snapshot 107 transitions to 0. In this way, the special-shaped screen of the foldable mobile phone displays the interface between the interface 109 shown in (g) in FIG. 16A and the interface 108 shown in (f) in FIG. 16A. In addition, in the interface, the user is used as a reference object, and a display direction of an image is a direction between a leftward direction of an image in the interface 109 shown in (g) in FIG. 16Aand an upward direction of an image in the interface 108 shown in (f) in FIG. 16A., and is generally located in a middle position of the image display area 103.

It should be noted that a plurality of interfaces that are drawn by the foldable mobile phone and that are in a process of transition from the start interface shown in (d) in FIG. 16A to the end interface shown in (j) in FIG. 16B each include: drawing video content and a menu control displayed on the interface. Drawing the video content displayed on the interface may be understood as: drawing the video content on a view based on a calculated display position of the video content, the view does not change, and the video content drawn on the view may change with video play. Drawing the menu control may be understood as that the menu control is controlled to rotate from -90° to 0°.

It should be further noted that the interface 108 shown in (g) in FIG. 16A is drawn in the background by the foldable mobile phone, and the special-shaped screen displays the window animation obtained based on the interface snapshot 107 shown in (c) in FIG. 16A, to avoid a screen flickering problem caused because the special-shaped screen directly displays (g) in FIG. 16A after (b) in FIG. 16A is displayed.

In addition, in a process in which the foldable mobile phone displays, based on the window animation, the interface snapshot 107 shown in (c) in FIG. 16A, when the transparency of the interface snapshot 107 approaches 0, the plurality of interfaces that are drawn by the foldable mobile phone and that are in a process of transition from the start interface shown in (d) in FIG. 16A to the end interface shown in (j) in FIG. 16B are gradually visible to the user.

In the foregoing content, the image 201a, the image 201b, the image 201c, the image 201d, the image 201e, and the image 201f are images in the video. For drawing convenience, the image 201a, the image 201b, the image 201c, the image 201d, the image 201e, and the image 201f have same image content. However, it may be learned that in a process in which the foldable mobile phone plays the video, when the user rotates the foldable mobile phone, and the foldable mobile phone displays a rotation animation, the video may be continued, and video content displayed on the special-shaped screen of the foldable mobile phone may change.

The interface 109, the interface 110, the interface 111, and the interface 108 may be understood as a same interface, but content of the interface changes, which may be referred to as a second interface.

The following describes the display method provided in the embodiments of this application with reference to a module in a software structure of an electronic device. First, it should be noted that the following embodiment is described by using an example in which a gallery application of a foldable mobile phone plays a video, and the foldable mobile phone switches, by using a rotation animation based on an operation of a user for adjusting from portrait holding to landscape holding, from displaying a picture of a video in portrait mode to displaying a picture of a video in landscape mode, but this does not constitute a limitation on an application scenario of the display method, and does not constitute a limitation on an executor of the display method.

As shown in FIG. 17A and FIG. 17B, a display method provided in an embodiment of this application includes the following steps.

S1201. A foldable mobile phone is in a posture of portrait 0°, and a user inputs an operation of browsing a video on a special-shaped screen.

The video refers to the video displayed in the video browsing interface shown in (a) in FIG. 16. For example, a size of one image of frame in the video is 1418×2520.

The foldable mobile phone is in a posture of portrait 0° and is in a folded state. The special-shaped screen of the foldable mobile phone is enabled for screen display.

In some embodiments, the user inputs an operation to start camera running, and a camera preview interface is displayed on the special-shaped screen. The user inputs an operation in the camera preview interface to shoot the video, where the video is stored in a gallery application. The user operates a component linked to the gallery application in the camera browsing interface, to input the operation of browsing the video.

In some other embodiments, the user inputs an operation to start the gallery application, and the special-shaped screen displays an interface of the gallery application, where the interface displays a thumbnail of the video. The user selects the video on the interface of the gallery application, to input the operation of browsing the video.

In this embodiment, an example in which the user operates a component linked to the gallery application in the camera browsing interface, to input the operation of browsing the video is used for description.

S1202. A window manager detects the operation that is of browsing the video and that is input by the user, and sets a display angle to 0°.

The foldable mobile phone is in a posture of portrait 0°, the user inputs the operation of browsing the video, the window manager may monitor, based on a touch sensor or the like, the operation that is of browsing the video and that is input by the user, and the window manager sets the display angle to 0°, that is, a display angle of a window is 0°.

In some embodiments, the special-shaped screen is enabled for screen display. The window manager may record a value of a parameter of a display manner of the foldable mobile phone, and the value of the parameter is used to indicate a screen for screen display.

In some other embodiments, the window manager may alternatively determine a posture of the foldable mobile phone based on components such as an acceleration sensor or a gyro sensor, to set a display angle of a window based on the determined posture. As described in step S1201, the foldable mobile phone is in a posture of portrait 0°, the window manager determines, by using the acceleration sensor, the gyro sensor, or the like, that the foldable mobile phone is in a posture of portrait 0°, and sets the display angle of the window to 0°.

S1203. The window manager starts Gallery for running.

After the window manager detects the operation that is of browsing the video and that is input by the user, because the video is stored in the gallery and needs to be displayed by using the gallery application, the window manager may further start Gallery for running.

It should be noted that in a scenario in which the user inputs the operation of browsing the video on the interface of the gallery application, the gallery application is in a started state, and this step may not be performed.

S1204. An activity component controls the window manager to set a window animation.

Gallery is started for running. The activity (active) component of Gallery sets a type of the window animation to the window manager, for example, the window animation is of a fade-in fade-out animation type, and the window manager configures a parameter of the window animation of the type based on the type of the window animation.

S1205. A VideoTouchView component obtains a display angle lastDegree=0° from the window manager.

S1206. The VideoTouchView component records the display angle lastDegree=0°.

The gallery application starts and runs, and the VideoTouchView (video player container) component of the gallery application is initialized. After initialization, the display angle of the window is obtained from the window manager, and the display angle of the window is recorded. As described in step S1202, the display angle of the window set by the window manager is 0°. Based on this, the display angle recorded by the VideoTouchView component is lastDegree=0°.

S1207. The SurfaceView component sets a size of the view.

The user inputs the operation of browsing the video by using step S1201, and the foldable mobile phone needs to display the video on the special-shaped screen. As shown in (a) in FIG. 16A, the menu display area in the browsing interface of the video displayed on the special-shaped screen is used to display a menu, and the image display area is used to display the video content. That is, the view of the browsing interface of the video may be understood as a view of a parent layout, and includes a child view of the menu display area and a child view of an area for displaying the video. The child view of the area for displaying the video content is used to display the image 201a shown in (a) in FIG. 16.

To display the browsing interface of the video on the special-shaped screen, creating the view of the video includes setting a size of the view of the browsing interface of the video, that is, setting a size of the view of the parent layout. The SurfaceView component includes a parent layout viewpager (that is, a layout manager of the parent layout), which may set the size of the view of the parent layout according to a size of the special-shaped screen, for example, width x height is 1080 x 1200. For example, the size of the view of the parent layout is: width x height is 1092 x 1200.

A height of the child view of the area for displaying the video content is the same as a height of the view of the parent layout, and a width of the child view of the area for displaying the video content is less than a width of the view of the parent layout. The parent layout viewpager may further set a difference between a left side of the child view of the area for displaying the video content and a left side of the view of the parent layout, that is, a width difference between the child view of the area for displaying the video content and the view of the parent layout. The SurfaceView component sets a size of the child view of the area for displaying the video content based on a difference between left margins set by the parent layout viewpager. For example, the difference between the left margins set by the parent layout viewpage is 417, and the size of the child view of the area for displaying the video content is: width x height is 675 x 1200.

Certainly, the child view of the menu display area also needs to be created, but this is not described because the child view is not a focus of the embodiments of this application.

S1208. The SurfaceView component calculates and records a scaling ratio and an offset of the video, and record the display angle 0° of the video.

The width and the height of the image in the video may not match the width and the height of the child view of the area for displaying the video content. Based on this, the image in the video needs to be adjusted. In some embodiments, an updateVideoView component of the SurfaceView component calculates the scaling ratio and the offset of the image in the video. The updateVideoView component may adjust the size of the image in the video by using the scaling ratio, and adjust, by using the offset, a display position of the image in the video in the child view of the area for displaying the video content.

It should be noted that for a manner in which the updateVideoView component calculates the scaling ratio and the offset of the image in the video and records the display angle of the video, refer to content of step S908 in the foregoing embodiment, and details are not described herein again.

S1209. When the SurfaceView component determines that there is no animation, set a width and a height of video content to a Transaction component, and set a matrix that carries the display angle and the offset.

Because the foldable mobile phone is currently in a phase of displaying the browsing interface of the video, the foldable mobile phone does not rotate, and the SurfaceView component determines that there is no animation. In some embodiments, the SurfaceView component may determine whether there is an animation based on whether an animation parameter is null. Certainly, if the parameter is null, there is no animation; otherwise, there is an animation.

The animation mentioned in this embodiment may be referred to as a rotation animation. The rotation animation refers to that the user rotates the foldable mobile phone, and the foldable mobile phone displays an animation of transition from the interface 109 shown in (d) in FIG. 16A to the interface 108 shown in (j) in FIG. 16B.

In some embodiments, a manner in which the SurfaceView component sets the width and the height of the video content to the Transaction component, and sets the matrix that carries the display angle and the offset is shown in FIG. 18, and includes the following steps.

S1301. Construct a matrix object matrix, and set an angle in the matrix object.

A matrix object after an angle is set for the matrix object matrix may be expressed as matrix.setRotate(rotation). The angle set for the matrix object refers to the display angle 0° of the video recorded by the SurfaceView component proposed in step S1208.

It should be noted that the matrix object after the angle is set is a matrix object with an angle.

S1302. Set corresponding offsets for x and y in the matrix object.

Obtain an array matrixArray = matrix.getValues(matrixArray) in the matrix object. An offset on the x-axis and an offset on the y-axis are respectively set in place 2 and place 5 of the array, that is, the offset on the x-axis and the offset on the y-axis are respectively carried in place 2 and place 5 of the array, which is specifically denoted as follows:

$$matrixArray[2] = ranslateX;$$

matrixArray[5] = ranslateY.

Certainly, place 2 and place 5 are only examples, and the offset on the x-axis and the offset on the y-axis may be alternatively carried in other places of the array. The offset on the x-axis and the offset on the y-axis refer to the offset of the image in the video recorded by the SurfaceView component proposed in step S1208.

S1303. Set a width and a height of video content to the Transaction component.

The width and the height of the video content refer to a width and a height after the image in the video is scaled based on the scaling ratio of the image in the video recorded by the SurfaceView component proposed in step S1208, that is, a width and a height for displaying the image in the video. The width and the height of the image in the video mentioned below refer to a width and a height for displaying the image.

That the SurfaceView component sets the width and the height of the video content to the Transaction component may be expressed as follows:

Transaction.setBufferSize(surfaceControl, view Width, viewHeight).

S1304. Set data of the matrix object including the angle and the offset to the Transaction component.

Step S1304 may be expressed as setMatrix(Matrix matrix).

The Transaction component includes a matrix object, and the matrix object does not include an angle. In a native procedure, the Transaction component controls, based on the matrix object, the SurfaceView component to draw a picture of the video. However, because the matrix object does not include an angle, when the view is drawn, the video content cannot be rotated.

In addition, the Transaction component is a component that is at a framework layer and that is not open to the application layer. An application at the application layer cannot modify a matrix object in the Transaction component, and consequently, an angle cannot be written into the matrix object.

Based on this, the interface is set between the Transaction component and the application layer, so that the application at the application layer can modify the matrix object in the Transaction component. In some embodiments, a manner of setting the interface between the Transaction component and the application layer is as follows: A function corresponding to the matrix object in the Transaction component encapsulates a function that can be modified by an application at the application layer.

The SurfaceView component sets, through the interface that is set between the Transaction component and the application layer, data of the matrix object including an angle and an offset to the matrix object in the Transaction component. In this way, the Transaction component controls, based on the matrix object, the SurfaceView component to draw a picture of a video, and video content can be rotated based on the angle.

S1305. Transaction.apply( )

The SurfaceView component sets the width and the height, the offset, and the display angle of the image of the video to the Transaction component by using step S1303 and step S1304, and the Transaction component may perform Transaction.apply( ) to perform a subsequent operation. The subsequent operation may refer to content in the following step S1210.

A component that performs the action in step S1209 may be the updateVideoView component in the SurfaceView component.

S1210. The Transaction component controls a handler component to perform a drawing operation through the SurfaceView component.

In some embodiments, the Transaction component may control the handler component to perform the drawing operation through the SurfaceView component based on the matrix object. The matrix object may include the width and the height of the image of the video, the offset, and the display angle. In some other embodiments, the Transaction component may set data of the matrix object to the SurfaceView component, and the SurfaceView component controls, based on the data of the matrix object, the handler component to perform the drawing operation. Certainly, the data of the matrix object may include the width and the height of the image of the video, the offset, and the display angle.

S1211. The handler component draws and displays an interface shown in (a) in FIG. 16A by using a display.

The Transaction component controls, by using the SurfaceView component, the handler component to draw the view of the browsing interface of the video, and draw the image of the video based on the width and height of the image of the video and the offset in the image display area of the view (that is, the child view of the area in which the video content is displayed). After the drawing is completed and screen display is performed, the special-shaped screen may display the interface shown in (a) in FIG. 16A. A display direction of the image in the video in the image display area may be indicated by a display angle.

It may be understood that a display position of the image in the video may be determined based on the width and the height, the offset, and the display angle of the image in the video. Certainly, the display position of the image in the video may be alternatively determined based on another parameter, and is not limited to the width and the height of the image, the offset, and the display angle.

It should be noted that step S1202 to step S1211 may be understood as follows: The foldable mobile phone initializes the view of the browsing interface of the video in response to the operation that is of browsing the video and that is input by the user, and draws and displays an initial status of the view of the browsing interface of the video.

It should be noted that the SurfaceView component includes an onLayout component, which is controlled by the Transaction component to further control the handler component to draw and display the interface shown in (a) in FIG. 16A. In some embodiments, the onLayout component may send a message to the handler component to notify to update the view to draw the interface shown in (a) in FIG. 16A.

S1212. The use inputs an operation of rotating the screen by 90° counterclockwise.

The user adjusts the holding manner of the foldable mobile phone, and controls the foldable mobile phone to rotate by 90° counterclockwise. Correspondingly, the special-shaped screen switches from portrait display to landscape display.

It should be noted that, after switching from displaying the video in portrait mode to displaying the video in landscape mode, the special-shaped screen should first present the interface shown in (b) in FIG. 16A, and then the special-shaped screen displays an animation of transition from (d) in FIG. 16A to (j) in FIG. 16B. The following step S1213 to step S1223 are an implementation solution of presenting the interface shown in (b) in FIG. 16A and drawing(g) in FIG. 16A in the background after the special-shaped screen switches from displaying the video in portrait mode to displaying the video in landscape mode. Step S1224 to step S1230 are an implementation solution in which the special-shaped screen displays the animation of transition from (d) in FIG. 16A to (j) in FIG. 16B.

S1213. The window manager detects an operation that is of rotating the screen by 90° counterclockwise and that is input by the user, and sets a display angle to 90°.

For a specific implementation of step S1213, refer to content of step S912 in the foregoing embodiment. Details are not described herein again.

S1214. The window manager obtains a snapshot of the interface displayed on the display, and displays an interface shown in (c) in FIG. 16A by using the display

For a specific implementation of step S1214, refer to content of step S913 in the foregoing embodiment. Details are not described herein again.

S1215. A VideoTouchView component obtains a display angle curentRotation=90° from the window manager.

S1216. The VideoTouchView component records the display angle curentRotation=90°.

The VideoTouchView component performs system callback onConfigChange, to obtain and record the display angle curentRotation=90° of the window from the window manager.

S1217. The window manager starts the window animation for 100 ms.

For implementation content of step S1217, refer to content of step S916 in the foregoing embodiment. Details are not described herein again.

S1218. The VideoTouchView component calculates an animation start angle -90°, and record a start scaling ratio and a start offset.

For a specific implementation in which the VideoTouchView component performs step S1218, refer to content of step S917 in the foregoing embodiment. Details are not described herein again.

It should be noted that after calculating the animation start angle and recording the start scaling ratio and the start offset, the VideoTouchView component may further send a message with a delay of 50 ms to a handler (organizer) component. 50 ms is only an example. A purpose of sending, by the VideoTouchView component, the message with the delay of 50 ms to the handler component is to wait for the SurfaceView component to complete, by using the delay duration, the view of the video at the end of the animation.

It should be further noted that, after calculating the animation start angle and recording the start scaling ratio and the start offset, the VideoTouchView component may further trigger re-drawing of the view. In some embodiments, a manner in which the VideoTouchView component triggers view re-drawing is to set a flag invalidate for the view of the browsing interface of the video. In this way, the handler component draws the view of the video browsing interface based on the flag invalidate.

A size of the re-drawn view of the browsing interface of the video, a scaling ratio and an offset of the image when the video is displayed in the view, and a display angle of the image in the video are obtained in the following step S1219 and step S1221. It can be learned that the SurfaceView component may perform the following step S1219 and step S1221 within the foregoing proposed delay duration.

S1219. The SurfaceView component sets a size of the view.

The special-shaped screen switches from portrait display to landscape display, and the special-shaped screen displays a horizontal window. Therefore, the View component needs to reset the size of the view of the browsing interface of the video, that is, set the size of the window for displaying the video in landscape mode. For a specific manner, refer to the content of step S918 in the foregoing embodiment. Details are not described herein again.

In response to that the screen rotates by 90° counterclockwise from portrait 0°, the foldable mobile phone usually sets the view of the image display area only once. In the following execution process in step S1225 to step S1230, the view of the image display area does not change, and therefore cannot be reset. In this way, it can be ensured that a size of the view can be the same as that of the image display area, and can be full of the image display area. Therefore, when the user performs a left-slide or right-slide operation on the image display area to switch the image, the foldable mobile phone may respond to the operation.

S1220. The SurfaceView component calculates and records a scaling ratio and an offset of the video, and records the display angle 0° of the video.

The user rotates the screen by 90° counterclockwise. The special-shaped screen switches from portrait display to landscape display. The special-shaped screen displays the video in landscape display mode, that is, a window for displaying the video is a horizontal window. The SurfaceView component needs to calculate a scaling ratio and an offset of the image in the video when the video is displayed in the horizontal window. In addition, the special-shaped screen displays the video in landscape display mode, and the video is still displayed in a forward direction. In this case, the SurfaceView component records the display angle of the video as 0°.

For a manner in which the SurfaceView component calculates and records the scaling ratio and the offset of the image in the video, refer to content of step S919 in the foregoing embodiment, and details are not described herein again.

S1221. When the SurfaceView component determines that there is no animation, set a width and a height of video content to a Transaction component, and set a matrix that carries the display angle and the offset.

The animation is not set. Therefore, the SurfaceView component determines that there is no animation. In addition, the SurfaceView component sets the width and height of the video content to the Transaction component based on the display angle, the scaling ratio, and the offset of the video, and sets a matrix that carries the display angle and the offset. For a manner in which the SurfaceView component sets the width and height of the video content to the Transaction component based on the display angle, the scaling ratio, and the offset of the video, and sets the matrix that carries the display angle and the offset, refer to content of step S1209. Details are not described herein again.

The animation mentioned in step S1221 may also be referred to as a rotation animation. The rotation animation refers to that the user rotates the foldable mobile phone, and the foldable mobile phone displays an animation of transition from the interface 109 shown in (d) in FIG. 16A to the interface 108 shown in (j) in FIG. 16B.

S1222. The Transaction component controls a handler component to perform a background drawing operation through the SurfaceView component.

S1223. The handler component draws an interface shown in (g) in FIG. 16A in the background.

The handler component draws the view displayed in landscape mode and the image display area of the view displayed in landscape mode, draws the image of the video based on the display angle of the video, the width and the height, and the offset, but does not display the image, the image is invisible to the user, and the special-shaped screen further continuously displays the animation started by the window manager.

Similar to step S1211, a display position of the image in the video may be determined based on the width and the height, the offset, and the display angle of the image in the video. Certainly, the display position of the image in the video may be alternatively determined based on another parameter.

S1224. After a delay of 50 ms, the VideoTouchView component records an animation end angle 0°, an end scaling ratio, and an end offset, and sets an animation.

After the delay of 50 ms, the handler component receives a message sent by the VideoTouchView component. After receiving the message, the VideoTouchView component controls the VideoTouchView component to record the animation end angle and the end scaling ratio and the end offset of the video in the animation.

For a specific implementation in which the VideoTouchView component performs step S1224, refer to content of step S922 in the foregoing embodiment. Details are not described herein again.

S1225. When the SurfaceView component determines that there is an animation, in a process in which animation execution duration does not reach total animation duration, calculate a display angle, a scaling ratio, and an offset of a video corresponding to each time of drawing in an animation process.

For a specific implementation in which the SurfaceView component performs step S1225, refer to content of step S923 in the foregoing embodiment. Details are not described herein again.

S1226. In the process in which the animation execution duration does not reach the total animation duration, the SurfaceView component sets a width and a height of video content to the Transaction component and sets a matrix that carries the display angle and the offset, based on the display angle, the scaling ratio, and the offset of the video corresponding to each time of drawing in the animation process.

The SurfaceView component calculates a display angle, a scaling ratio, and an offset of the video corresponding to each time of drawing in the animation execution process. The SurfaceView component further sets a width and a height of the video content to the Transaction component based on a display angle, a scaling ratio, and an offset of the video corresponding to one time of drawing, and sets a matrix that carries the display angle and the offset.

For a manner in which the SurfaceView component sets the width and height of the video content to the Transaction component based on the display angle, the scaling ratio, and the offset of the video, and sets the matrix that carries the display angle and the offset, refer to content of step S1209. Details are not described herein again.

S1227. The Transaction component controls a handler component to perform a drawing operation through the SurfaceView component.

For a specific implementation in which the SurfaceView component performs step S1227, refer to content of step S1210 above. Details are not described herein again.

S1228. In response to a 100 ms window animation, the window manager gradually changes transparency of the snapshot from 1 to 0.

In response to a 100 ms window animation, the window manager gradually changes transparency of the displayed interface snapshot from 1 to 0. In this way, it can be ensured that the interface drawn by the handler component by using step S1229 is visible to the user. Certainly, 100 ms is an example of the window animation duration.

An execution sequence of step S1228 and step S1229 is not limited to the sequence shown in FIG. 17A and FIG. 17B.

S1229. The handler component sequentially draws interfaces shown in (d) in FIG. 16A to (j) in FIG. 16B based on the width and the height of the video content corresponding to each drawing operation and the matrix that carries the display angle and the offset.

S1230. In a process in which transparency of the window animation changes to 0, (x) in FIG. 16A to (j) in FIG. 16B that are drawn by the handler component gradually become visible, where x may be (d) in FIG. 16A or a subsequent diagram thereof.

After the SurfaceView component obtains the width and height of the video content corresponding to each drawing operation in the animation process, and the display angle and the offset, a flag invalidate may also be set for the view corresponding to the video. In this way, the Transaction component controls, through the SurfaceView component based on the flag invalidate, the handler component to draw the view corresponding to the video. In addition, a display position of the image in the video may be determined based on the width and the height, the offset, and the display angle of the image in the video. Certainly, the display position of the image in the video may be alternatively determined based on another parameter.

In addition, the handler component performs each drawing operation and screen display on the special-shaped screen in the animation process, and the special-shaped screen may display the animation of transition from (d) in FIG. 16A to (j) in FIG. 16B.

It should be noted that the window manager starts the window animation of 100 ms by using step S1217. After the window animation starts for 50 ms, the foldable mobile phone sets the animation by using the VideoTouchView component, and calculates, by using the SurfaceView component, a display angle, a scaling ratio, and an offset of the video corresponding to one drawing operation in the animation execution process. Actions of the VideoTouchView component and the SurfaceView component also occupy specific duration. When the Transaction component controls the handler component to perform drawing based on the display angle, the width and the height, and the offset of the video corresponding to one time of drawing in the animation execution process that are calculated by the SurfaceView component, the window animation started by the window manager probably ends. In this way, drawing content of each time of the handler component may be displayed by using the special-shaped screen, to present an animation of transition from (d) in FIG. 16A to (j) in FIG. 16B.

Further, even if the window animation started by the window manager does not end when the Transaction component controls the handler component to perform drawing based on the display angle, the width and the height, and the offset of the video corresponding to one time of drawing in the animation execution process that are calculated by the SurfaceView component, the window animation is to end. Drawing content of the handler component in previous several times is not displayed, that is, (d) in FIG. 16A and several subsequent frames of images may be invisible to the user, but this does not affect the user in perceiving an animation that the special-shaped screen transitions from (d) in FIG. 16A to (j) in FIG. 16B.

Another embodiment of this application further provides a computer-readable storage medium. The computer-readable storage medium stores instructions. When the instructions are run on a computer or a processor, the computer or the processor is enabled to perform one or more steps in any one of the foregoing methods.

The computer-readable storage medium may be a non-temporary computer-readable storage medium. For example, the non-temporary computer-readable storage medium may be a read-only memory (Read-Only Memory, ROM), a random access memory (Random Access Memory, RAM), a CD-ROM, a magnetic tape, a floppy disk, an optical data storage device, or the like.

Another embodiment of this application further provides a computer program product including instructions. When the computer program product runs on a computer or a processor, the computer or the processor is enabled to perform one or more steps in any one of the foregoing methods.

## Claims

1.  A display method, applied to an electronic device, wherein a display of the electronic device comprises a first area and a second area, the first area and the second area do not overlap, a hole area is provided in the second area, a camera is mounted in the hole area, and the display method comprises:

    displaying, by the display of the electronic device, a first interface, wherein a first image is displayed in an area that is in the first interface and that corresponds to the first area, the first image is displayed in a first direction, a menu control is displayed in the second area, and the menu control is used to process the first image;
    obtaining, by the electronic device, a snapshot of the first interface in response to an operation of rotating in a first rotation direction;
    displaying, by the electronic device, the snapshot, wherein the first image is displayed in a second direction in the displayed snapshot, the second direction and the first direction have a first included angle, and transparency of the snapshot is a first value;
    displaying, by the electronic device, a second interface when a transparency value of the snapshot is less than a second value, wherein a second image is displayed in an area that is in the second interface and that corresponds to the first area, the second image is displayed in a third direction, the third direction is a direction in a process in which the second direction transitions to the first direction, and the second value is less than the first value;
    displaying, by the electronic device, an animation of transition from the second image to a third image in the second interface, wherein the third image is displayed in the first area in the first direction when the electronic device displays the third image; and
    continuously displaying the menu control in the second area in a process of displaying the second image and the animation of transition from the second image to the third image in the first area of the display of the electronic device.

2.  The display method according to claim 1, wherein after the displaying, by the electronic device, the snapshot, and before the displaying a second interface, the method further comprises:

    determining, by the electronic device, a display position of the second image; and
    drawing, by the electronic device, the second image in a first view corresponding to the first area based on the display position of the second image.

3.  The display method according to claim 2, wherein after the displaying, by the electronic device, the snapshot, the method further comprises:

creating, by the electronic device, the first view, wherein a size of the first view is a first size; determining, by the electronic device, a display position of a fourth image; and drawing, by the electronic device, the fourth image in the first view based on the display position of the fourth image, wherein a direction of the fourth image is the first direction.

4. The display method according to claim 3, wherein in a process of drawing the fourth image in the first view, the transparency of the snapshot transitions from a third value to a fourth value, the third value is less than the first value and greater than the second value, and the fourth value is less than the third value and greater than the second value; and

in a process in which the transparency of the snapshot transitions from the third value to the fourth value, the fourth image is invisible to a user.

5. The display method according to claim 4, wherein in a process in which the transparency of the snapshot transitions from the first value to the second value, an image drawn by the electronic device in the first view is invisible to the user.

6. The display method according to any one of claims 3 to 5, wherein the method further comprises:

before determining the display position of the fourth image, determining, by the electronic device, whether there is an animation; and
when determining that there is no animation, determining the display position of the fourth image, and setting a start animation after a delay of first duration.

7. The display method according to claim 6, wherein the method further comprises:

before determining the display position of the second image, determining, by the electronic device, whether there is an animation; and
determining the display position of the second image when the electronic device determines that there is an animation.

8. The display method according to any one of claims 3 to 5, wherein the creating, by the electronic device, the first view comprises:

setting an angle of the display to a first angle; and
creating the first view based on the first angle.

9. The display method according to any one of claims 1 to 8, wherein after the obtaining a snapshot of the first interface, the method further comprises:
starting, by the electronic device, a window animation, wherein the window animation is used to control the transparency of the snapshot to transition from the first value to a fifth value when the electronic device displays the snapshot, the fifth value indicates that the snapshot is completely transparent, the fifth value is less than or equal to the second value, and duration of transition from the first value to the fifth value is second duration.

10. The display method according to any one of claims 1 to 9, wherein before the displaying, by the display of the electronic device, a first interface, the method further comprises:

setting, by the electronic device, the angle of the display to a second angle;
creating, by the electronic device, a second view of the first area based on the second angle, wherein a size of the second view is a second size;
determining, by the electronic device, a display position of the first image; and
drawing, by the electronic device, the first interface in the second view based on the display position of the first image.

11. The display method according to claim 2, wherein the determining a display position of the second image comprises:

obtaining a scaling ratio, an offset, and a display angle of the second image through calculation, wherein the display angle of the second image is used to indicate the third direction, the scaling ratio of the second image is used to indicate a proportional relationship between the second image and the first area, and the offset of the second image is used to indicate a display area of the second image in the first area; and

determining the display position of the second image based on the scaling ratio, the offset, and the display angle of the second image.

12. The display method according to claim 11, wherein the obtaining a scaling ratio, an offset, and a display angle of the second image through calculation comprises:

obtaining a change rate of a scaling ratio of an image, a change rate of an offset, and a change rate of a display angle through calculation, obtaining, through calculation based on a total change amount of the scaling ratio of the image and the change rate of the scaling ratio of the image, a change value of the scaling ratio of the image corresponding to one image drawing operation, and using a sum of a scaling ratio of a fifth image and the change value of the scaling ratio of the image as the scaling ratio of the second image;
obtaining, through calculation based on a total change amount of an offset of the image and a change rate of the offset of the image, a change value of the offset of the image corresponding to one image drawing operation, and using a sum of an offset of the fifth image and a change amount of the offset of the image as the offset of the second image; and
obtaining, through calculation based on a total change amount of a display angle of the image and a change rate of the display angle of the image, a change value of the display angle of the image corresponding to one image drawing operation, and using a sum of a display angle of the fifth image and the change value of the display angle of the image as the display angle of the second image, wherein
the fifth image is drawn by the electronic device based on a previous drawing operation of a drawing operation for the second image; and
the total change amount of the scaling ratio of the image refers to a difference between a scaling ratio of the first image and a scaling ratio of the third image, the total change amount of the offset of the image refers to a difference between an offset of the first image and the scaling ratio of the third image, and the total change amount of the display angle of the image refers to an angle by which the electronic device rotates in the first rotation direction.

13. The display method according to any one of claims 1 to 12, wherein an implementation in which the electronic device displays the animation of transition from the second image to the third image in the second interface comprises: drawing and displaying, by the electronic device, an image in the first view based on display positions of images corresponding to a plurality of drawing operations, wherein the display positions of the images corresponding to the plurality of drawing operations are used to indicate that the image transitions from the second image to the third image.

14. The display method according to any one of claims 1 to 13, wherein the first image, the second image, and the third image correspond to a same image in a gallery.

15. The display method according to any one of claims 2 to 10 or claim 13, wherein the first image, the second image, and the third image correspond to different frames of images in a same video.

16. The display method according to claim 15, wherein the determining a display position of the second image comprises:

calculating a width and a height for displaying the second image, and setting a display angle and an offset of the second image by using a matrix object, wherein the display angle of the second image is used to indicate the third direction, and the offset is used to indicate a display area of the second image in the first area; and
determining the display position of the second image based on the width and the height for displaying the second image, the offset, and the display angle.

17. The display method according to claim 16, wherein a manner of setting the display angle and the offset of the second image by using the matrix object comprises:

constructing a first matrix object, wherein the offset and the display angle of the second image are stored in the first matrix object; and
writing, through an interface between a transaction Transaction component and an application layer of the electronic device, the offset and the display angle of the second image into a second matrix object of the Transaction component.

18. The display method according to any one of claims 1 to 17, wherein the first image is displayed at a center position in the area that is in the first interface and that corresponds to the first area; the second image is displayed at a center position in the area that is in the second interface and that corresponds to the first area; and the third image is displayed at the center position in the area that is in the second interface and that corresponds to the first area.

19. The display method according to any one of claims 1 to 18, wherein in a process in which the electronic device displays the animation of transition from the second image to the third image in the second interface, the electronic device further displays, in the second area, an animation of transition of the menu control from the third direction to the first direction.

20. The display method according to any one of claims 1 to 19, wherein the menu control comprises one or more of an add to favorites control, a return control, and a delete control, and that the menu control is used to process the first image comprises:

when the menu control comprises the add to favorites control, receiving an operation performed on the add to favorites control, and adding the first image to a favorites album of the gallery;
when the menu control comprises the return control, receiving an operation performed on the return control, and displaying a third interface, wherein the third interface is a previous-level interface of the first interface; or
when the menu control comprises the delete control, receiving an operation performed on the delete control, and deleting the first image.

21. An electronic device, comprising:

one or more processors, a memory, and a display, wherein
the memory and the display are coupled to the one or more processors, the memory is configured to store computer program code, the computer program code comprises computer instructions, and when the one or more processors execute the computer instructions, the electronic device performs the display method according to any one of claims 1 to 20.

22. A computer-readable storage medium, configured to store a computer program, wherein when being executed, the computer program is specifically used to implement the display method according to any one of claims 1 to 20.

23. A computer program product, wherein when the computer program product runs on a computer, the computer is enabled to perform the display method according to any one of claims 1 to 20.

FIG. 1

FIG. 2

Portrait 0°

Landscape 90°

(a)

(b)

FIG. 3

Portrait 0°

Landscape 90°

(a)

(b)

FIG. 4

FIG. 5

FIG. 6

FIG. 7

Electronic device

| | | |
|---|---|---|
| Speaker [140A] | | |
| Receiver [140B] | Audio module [140] | |
| Microphone [140C] | | Processor [110] |
| Headset jack [140D] | | |

Displays 1~N [140]

Sensor module [150]

Pressure sensor [150A]

Touch sensor [150B]

Acceleration sensor [150C]

Gyroscope sensor [150D]

Internal memory [120]

FIG. 8

Application layer

Gallery

| activity | presenter | View | VideoTouchView | handler | SurfaceView |

...

Application framework layer

| Window manager | doFream | View system | ... |

| Transaction |

System library                                          Android runtime

| Surface manager | Three-dimensional graphics processing library | ... |

| Two-dimensional graphics engine | Media library |

Kernel layer

| Display driver | Sensor driver | ... |

FIG. 9

FIG. 10A

When the transparency of the snapshot 107 is 0, display an animation of transition from (h) to (j)

Interface 110

Image 101e

103

102

(h)

Interface 111

Image 101f

103

102

(i)

Interface 108

Image 101c

103

102

(j)

FIG. 10B

FIG. 11

Gallery

| Window manager | activity | presenter | View | doFream |

S901. Input an operation of browsing an image 101

S902. Set a display angle to 0°

S903. Start Gallery for running

S904. Set a window animation

S905. Obtain a display angle lastDegree=0°

S906. Record the display angle lastDegree=0°

S907. Set a size of view

S908. Calculate and record a scaling ratio and an offset of the image 101, and record the display angle 0° of the image 101

S909. When there is no animation, determine a display position of the image 101 based on the display angle 0°, the scaling ratio, and the offset of the image 101

S910. Draw and display an interface shown in (a) in FIG. 10A by using a display

S911. Input an operation of rotating a screen by 90° counterclockwise

S912. Set the display angle to 90°

S913. Obtain a snapshot, and display an interface shown in (c) in FIG. 10A by using the display

S914. Obtain a display angle curentRotation=90°

S915. Record the display anglecurentRotation=90°

S916. Start the window animation for 100 ms

S917. Calculate an animation start angle – 90°, and record a start scaling ratio and a start offset

TO FIG. 12B    TO FIG. 12B    TO FIG. 12B    TO FIG. 12B

FIG. 12A

CONT.
FROM
FIG. 12A

CONT.
FROM
FIG. 12A

CONT.
FROM
FIG. 12A

CONT.
FROM
FIG. 12A

S918. Set a size of view

S919. Calculate and record a scaling ratio and an offset of the image 101, and record the display angle 0° of the image 101

S920. When there is no animation, determine a display position of the image 101 based on the display angle 0°, the scaling ratio, and the offset of the image 101

S922. After a delay of 50 ms, record an animation end angle 0°, an end scaling ratio, and an end offset, and set a start animation

S921. Draw an interface shown in (f) in FIG. 10A in the background, which is invisible to a user

S923. When there is an animation, in a process in which animation execution duration does not reach total animation duration, calculate a display angle, a scaling ratio, and an offset of an image corresponding to each time of drawing in an animation process

S924. In the process in which the animation execution duration does not reach the total animation duration, determine a display position of an image based on a display angle, a scaling ratio, and an offset of the image corresponding to each drawing operation in an animation process

S926. Sequentially draw interfaces shown in (d) in FIG. 10A to (j) in FIG. 10B based on the display position of the image

S925. In response to a 100 ms window animation, gradually change transparency of the snapshot from 1 to 0

S927. In a process in which transparency of the window animation changes to 0, (x) in FIG. 10A to (j) in FIG. 10B that are drawn gradually become visible, where x may be (d) in FIG. 10A or a subsequent diagram thereof

FIG. 12B

Calculate animation execution duration
runingTime = system current time System.currentTimeMillis() – animation start time anim.time [ 0 ~ 250] — S1001

Total change amount: change = end scaling ratio anim.scaleEnd – start scaling ratio anim.scaleStart
Calculate a current scaling ratio: scaleCurrent = ease(runingTime, scaleStart, change, duration)
[0.47619048 ~ 0.26785713] — S1002

Total change amount: change = end angle anim.rotateEnd – start angle anim.rotateStart
Calculated angle: rotation = ease(runingTime, anim.rotateStart, chang, duration)
[ –90 ~ 0] — S1003

Total change amount:
changeX = rotationTransEnd.x – rotationTransStart.x
changeY = rotationTransEnd.y – rotationTransStart.y
Calculate a current offset:
ranslateX = ease(scaleElapsed, TanslateStart.x, changeX, duration)
[0 ~ 410.0893]
ranslateY = ease(scaleElapsed, TanslateStart.y, changeY, duration)
[ 0 ~ 0] — S1004

S1005

runingTime > total animation duration duration (250)  — Yes → anim = null — S1006

No and Yes ↓

Mark invalidate to trigger drawing — S1007

FIG. 13

FIG. 14

The foldable mobile phone is rotated by 90° counterclockwise

(a)

(b)

(c)

(d)

FIG. 15

FIG. 16A

When the transparency of the snapshot 107 is 0, display an animation of transition from (h) to (j)

Interface 110

Image 201e

103

102

(h)

Interface 111 — Image 201f

103

102

(i)

Interface 108 — Image 201c

103

102

(j)

FIG. 16B

FIG. 17A

CONT. FROM FIG. 17A

CONT. FROM FIG. 17A

CONT. FROM FIG. 17A

CONT. FROM FIG. 17A

CONT. FROM FIG. 17A

S1218. Calculate an animation start angle –90°, and record a start scaling ratio and a start offset

**S1221. When there is no animation, set a width and a height of video content, and set a matrix that carries the display angle and the offset**

**S1222. Control to perform a drawing operation**

**S1223. Draw (f) in FIG. 16A in the background, which is invisible to a user**

S1225. When there is an animation, in a process in which animation execution duration does not reach total animation duration, calculate a display angle, a scaling ratio, and an offset of a video corresponding to each time of drawing in an animation process

S1224. After a delay of 50 ms, record an animation end angle 0°, an end scaling ratio, and an end offset, and set an animation

**S1226. In the process in which the animation execution duration does not reach the total animation duration, set a width and a height of video content and set a matrix that carries the display angle and the offset, based on the display angle, the scaling ratio, and the offset of the video corresponding to each time of drawing in the animation process**

**S1227. Control to perform a drawing operation**

**S1229. Sequentially draw interfaces shown in (d) in FIG. 16A to (j) in FIG. 16B based on the width and the height of the video content corresponding to each drawing operation and the matrix that carries the display angle and the offset**

S1228. In response to a 100 ms window animation, gradually change transparency of the snapshot from 1 to 0

**S1230. In a process in which transparency of the window animation changes to 0, (x) in FIG. 16A to (j) in FIG. 16B that are drawn gradually become visible, where x may be (d) in FIG. 16A or a subsequent diagram thereof**

FIG. 17B

Construct a matrix object matrix, and set an angle in the matrix object matrix.setRotate(rotation) — S1301

Set corresponding offsets for x and y in the matrix
matrixArray = matrix.getValues(matrixArray)
matrixArray[2] = ranslateX
matrixArray[5] = ranslateY
matrix.setValues(matrixArray) — S1302

Set a width and a height of video content to Transaction
Transaction.setBufferSize(surfaceControl, viewWidth, viewHeight) — S1303

Set data of the matrix object including the angle and the offset to Transaction
setMatrix(Matrix matrix) — S1304

Transaction.apply() — S1305

FIG. 18

## INTERNATIONAL SEARCH REPORT

| International application No. |
| --- |
| **PCT/CN2025/094803** |

| A. | CLASSIFICATION OF SUBJECT MATTER |
| --- | --- |

H04M1/02(2006.01)i

According to International Patent Classification (IPC) or to both national classification and IPC

| B. | FIELDS SEARCHED |
| --- | --- |

Minimum documentation searched (classification system followed by classification symbols)

IPC: H04M 1/-

Documentation searched other than minimum documentation to the extent that such documents are included in the fields searched

Electronic data base consulted during the international search (name of data base and, where practicable, search terms used)

CNTXT, ENTXTC, DWPI, CNKI: 异形, 挖孔, 屏, 旋转, 转动, 图像, 快照, 过渡, 角度, profile, hole, screen, spin, turn, image, snapshot, transition, angle

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2019179520 A1 (GUANGDONG OPPO MOBILE TELECOMMUNICATIONS CORP., LTD.) 13 June 2019 (2019-06-13)<br>description, paragraphs [0059]-[0154], and figure 1 | 1-23 |
| A | CN 114168031 A (HONOR DEVICE CO., LTD.) 11 March 2022 (2022-03-11)<br>entire document | 1-23 |
| A | CN 115361468 A (HONOR DEVICE CO., LTD.) 18 November 2022 (2022-11-18)<br>entire document | 1-23 |
| A | CN 102841722 A (LENOVO (BEIJING) CO., LTD.) 26 December 2012 (2012-12-26)<br>entire document | 1-23 |
| A | CN 117149316 A (GUANGDONG OPPO MOBILE TELECOMMUNICATIONS CORP., LTD.) 01 December 2023 (2023-12-01)<br>entire document | 1-23 |
| A | US 2010189413 A1 (CASIO HITACHI MOBILE COMMUNICATIONS CO., LTD.) 29 July 2010 (2010-07-29)<br>entire document | 1-23 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 July 2025** | **21 July 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2025/094803**

| Patent document cited in search report | | | Publication date (day/month/year) | Patent family member(s) | | | Publication date (day/month/year) |
|---|---|---|---|---|---|---|---|
| US | 2019179520 | A1 | 13 June 2019 | RU | 2020122410 | A | 13 January 2022 |
| | | | | EP | 3495935 | A1 | 12 June 2019 |
| | | | | EP | 3495935 | B1 | 15 April 2020 |
| | | | | SG | 11202004089 | WA | 28 May 2020 |
| | | | | AU | 2018384670 | A1 | 21 May 2020 |
| | | | | AU | 2018384670 | B2 | 24 December 2020 |
| | | | | WO | 2019114442 | A1 | 20 June 2019 |
| | | | | ZA | 202003477 | B | 27 October 2021 |
| | | | | US | 10635279 | B2 | 28 April 2020 |
| CN | 114168031 | A | 11 March 2022 | None | | | |
| CN | 115361468 | A | 18 November 2022 | None | | | |
| CN | 102841722 | A | 26 December 2012 | None | | | |
| CN | 117149316 | A | 01 December 2023 | None | | | |
| US | 2010189413 | A1 | 29 July 2010 | JP | 2010175643 | A | 12 August 2010 |
| | | | | JP | 4691697 | B2 | 01 June 2011 |
| | | | | US | 9041779 | B2 | 26 May 2015 |
| | | | | US | 2015189260 | A1 | 02 July 2015 |
| | | | | US | 2015172643 | A1 | 18 June 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410869806

- CN 202410768142